# EUROPÄISCHE PATENTSCHRIFT

(11) **EP 0 939 248 B1**
(45) Veröffentlichungstag und Bekanntmachung des Hinweises auf die Patenterteilung: **10.12.2003**
(21) Anmeldenummer: 99103816.7
(22) Anmeldetag: 26.02.1999
(51) Int. Cl.: F16H 55/17, F16H 1/08

(54) **Aussenverzahnte Zahnradeinheit**
Gear wheel unit with external teeth
Dispositif d'engrenage avec denture extérieure

(30) Priorität: 27.02.1998 DE 19808519
(43) Veröffentlichungstag der Anmeldung: 01.09.1999
(73) Patentinhaber: BHS Getriebe GmbH, 87527 Sonthofen (DE)
(72) Erfinder: Sandig, Hans-Georg, 87527 Sonthofen (DE)
(74) Vertreter: Herzog, Markus, Dipl.-Phys. Dr.

(56) Entgegenhaltungen:
- DE-A- 2 024 436
- DE-C- 250 935
- DE-C- 317 058
- DE-C- 350 422
- DE-C- 499 901
- FR-A- 529 300
- BHS-Prospekt: "BHS-Stirnradgetriebe, einstufig, für hochtourige Anlagen", Druckvermerk H-3/1-87

## Beschreibung

Die Erfindung betrifft eine außenverzahnte Zahnradeinheit, insbesondere für Schwermaschinengetriebe und/oder schnellaufende Getriebe, wie Turbomaschinengetriebe, gemäß dem Oberbegriff des Anspruchs 1.

Zahnradeinheiten der hier betrachteten Art sind beispielsweise im Einsatz bei Stirnradgetrieben, wie sie in dem BHS-Prospekt "BHS-Stirnradgetriebe, einstufig, für hochtourige Anlagen" mit dem Druckvermerk H-3/1-87 dargestellt sind.

In solchen Getrieben nehmen insbesondere die großen Stirnzahnräder Dimensionen von beispielsweise 500 mm Durchmesser bis 1250 mm Durchmesser an. Gleichzeitig kann die axiale Breite der großen Zahnräder in der Größenordnung von 200 - 600 mm bei Gerad- und Einfachschrägverzahnung liegen, bei Doppelschrägverzahnung in der Größenordnung von 250 - 700 mm.

Es ist bekannt, solche Zahnradeinheiten in Vollwellen-Bauart auszuführen. Vollwellen-Bauart besagt, daß ein Scheibenkörper einstückig mit einer Welle hergestellt ist, wobei die Welle über die Endflächen des Scheibenkörpers übersteht und der Lagerung dient. Diese Vollwellen-Bauart hat Vorteile. Die Spannungen aus Fliehkraft und Wärmedifferenz zwischen Verzahnungsbereich und Zentralbereich sind gering. Auch ergeben sich aufgrund der Massivbauart geringe Formänderungen (Volumenkonstanz) etwa bei Fliehkraftbeanspruchung.

Die Vollwellen-Bauart hat aber auch Nachteile. Zur Erläuterung dieser Nachteile muß zunächst kurz auf die Herstellungsart solcher Zahnradeinheiten in Vollwellen-Bauart eingegangen werden. Es wird zunächst ein Stahlgußteil hergestellt, welches die Welle und den Scheibenkörper in einstückiger Bauweise umfaßt. Dieses Stahlgußteil wird sodann geschmiedet, hierauf einer spanabhebenden Bearbeitung unterworfen, um die endgültigen Dimensionen festzulegen und insbesondere die Verzahnung anzubringen. Zum Abbau der Gieß- und Schmiedespannungen und zur Optimierung des Materialgefüges werden dazwischen verschiedene Wärmebehandlungen durchgeführt. Anschließend wird bei ca. 900°C aufgekohlt und daraufhin gehärtet (Einsatzhärtung).

Die dabei entstehenden Härtespannungen, besonders bei größeren Bauteilen, können beträchtliche Größen annehmen und führen zu Problemen.

Weitere Probleme gehen zu einem wesentlichen Teil auf den Gießvorgang zurück, bei dem sich im Kernbereich der Welle und des Scheibenkörpers eine sogenannte Seigerungszone bildet, in der Verunreinigungen der Stahllegierung und Störungen in der Gefügestruktur in hoher Konzentration vorliegen.

Wenn die fertige Zahnradeinheit schließlich in Betrieb genommen wird, treten zusätzlich Fliehkraftspannungen und Betriebswärmespannungen auf, insbesondere im schnellen Anlaufbetrieb. Diese Spannungen können in der Seigerungszone zu unkontrollierbaren Spannungszuständen führen.

Um die negativen Auswirkungen der Seigerungszone, die umso größer sind, je großvolumiger die ganze Zahnradeinheit wird, zu beseitigen, ist bereits daran gedacht worden, zu einer Hohlwellen-Bauart überzugehen, insbesondere durch Ausbohren der Seigerungszone, so daß die Ansammlung schlechten Materials im Welleninneren beseitigt wird. Dieses Ausbohren der Welle hat jedoch nicht alle Probleme lösen können. Zum einen werden nämlich die durch Fliehkraft und Temperaturdifferenzen auftretenden Spannungen gegenüber der Vollwellen-Bauart vergrößert, so daß das Material beim Auftreten von Fliehkräften im Bereich des inneren Durchmessers nachgeben kann und dadurch zusätzliche Verformungsmöglichkeiten des Scheibenkörpers entstehen. Zum anderen bleibt die als Seigerung bekannte Konzentration von Verunreinigungen und Störungen der Gefügestruktur in den an die Bohrung angrenzenden Bereichen bestehen. Weiterhin können Härtespannungen nicht ausgeschlossen werden, weil der Härtevorgang im Bereich der Bohrung ungenügend ist.

Es sind auch Zahnradeinheiten in Betracht gezogen worden, bei denen der Scheibenkörper auf die Welle aufgeschrumpft ist. Diese Bauart ist nur begrenzt anwendbar, weil bei hohen Fliehkraft- und Wärmebelastungen ein Lösen des Scheibenkörpers aus dem Verbund mit dem Wellenkörper nicht mit Sicherheit zu vermeiden ist. Es besteht deshalb nach wie vor die Tendenz zur einstückigen Bauweise.

Aus der DE-PS-350422 ist ein Zahnrad bekannt, welches gebildet ist aus einem eine Außenverzahnung tragenden Radkranz und einem mit dem Randkranz verbindbaren Speichenstern, in dessen Zentrum eine Nabe zur Verbindung mit einer Welle vorgesehen ist. Der Radkranz weist an seinem Innenumfang in radialer Richtung nach innen vorstehende Flanschlamellen auf, über welche der Zahnkranz mit dem Speichenstern durch Schrauben verbindbar ist. Im fertig montierten Zustand umgibt der Radkranz den Speichenstern. Der Randkranz kann überdies aus einer Mehrzahl von in axialer Richtung nebeneinander liegenden Radkranz-Scheiben gebildet sein.

Der Erfindung liegt die Aufgabe zugrunde, eine Zahnradeinheit gattungsgemäßer Art so aufzubauen, daß schwer kontrollierbare Spannungszustände, insbesondere Härtespannungszustände, vermieden oder minimiert werden.

Zur Lösung dieser Aufgabe wird erfindungsgemäß vorgeschlagen, daß der Verzahnungsträger entweder mit einem Verzahnungsträgermantel ausgeführt ist, dessen Innendurchmesser größer ist als der Durchmesser des Lagerzapfens bzw. Anschlußteils oder/und mit einer Mehrzahl von in axialer Richtung aufeinanderfolgenden und miteinander verbundenen Verzahnungsträgerscheiben ausgeführt ist.

Bei dem erfindungsgemäßen Aufbau können Seigerungszonen weitgehend oder vollständig vermieden werden, was auf die Vermeidung großvolumiger Materialkonzentrationen zurückzuführen ist, die äußeren Wärmebehandlungen schwer zugänglich sind. Bei der erfindungsgemäßen Gestaltung sind alle Volumenbereiche der Komponenten, also des Verzahnungsträgermantels, der Lagerzapfen, der Anschlußteile und der Verzahnungsträgerscheiben relativ dünnwandig, so daß sie einerseits im Gegensatz zu großvolumigen Werkstücken keine vergleichbaren, von der Seigerungszone herrührenden Probleme aufweisen und daß andererseits äußere Behandlungen vergleichmäßigt auf alle Volumenbereiche einwirken.

Es mag vorkommen, daß bei den erfindungsgemäßen Zahnradeinheiten einzelne Komponenten oder Bereiche von Komponenten spannungsmäßig höher belastet sind als bei bekannten Zahnradeinheiten der Vollwellen-Bauart und der Hohlwellen-Bauart. Es hat sich aber gezeigt, daß die auftretenden Spannungsverteilungen rechnerisch leichter erfaßbar sind, insbesondere weil Elemente wie Rohrkörperscheiben zu zweidimensionalen, u.U. sogar linearen Spannungszuständen führen und kubisch orientierte radiale Spannungsverläufe vermieden sind.

Bei der ersten Alternative des Anspruchs 1 (Verzahnungsträgermantel) reduziert sich das spannungstechnische Problem auf das Problem eines dünnwandigen Rohrs, wobei bei einem Verzahnungsdurchmesser von 900 mm und mehr an eine Wandstärke von 150 - 200 mm gedacht werden kann. Bei kleineren Verzahnungsdurchmessern verringert sich die Wandstärke entsprechend dem Verhältnis der Verzahnungsdurchmesser. Dieses dünnwandige Rohr ist kürzer als die Wellenlänge bei Vollwellen-Bauart. Dank der Dünnwandigkeit ist eine annähernd gleichmäßige Wärmebehandlung aller Volumenbereiche bei der Einsatzhärtung zu erwarten. Auch das Schmieden gestaltet sich einfacher und im Hinblick auf die Vermeidung von Spannungszuständen insofern günstiger, als der Verzahnungsträgermantel in einem Ringwalzwerk gewalzt werden kann.

Im Falle der zweiten Alternative des Erfindungsvorschlags (Verzahnungsträgerscheiben) ergeben sich ähnlich günstige Verhältnisse hinsichtlich des Schmiedens und des Härtens bei entsprechender Bemessung der jeweiligen Scheibendicke.

Es werden nun zunächst die Weiterbildungsmöglichkeiten der ersten Alternative (Verzahnungsträgermantel) behandelt. Gemäß Anspruch 2 kann der Verzahnungsträgermantel an mindestens einem Ende, vorzugsweise an beiden Enden, mit einer Endscheibe verbunden sein, in deren Zentralbereich der Lagerzapfen bzw. Anschlußteil angeordnet ist. Sind an beiden Enden Endscheiben mit je einem Lagerzapfen oder sonstigen Anschlußteil angebracht, so ergeben sich hinsichtlich der Lagerung für die Zahnradeinheit die gleichen Möglichkeiten wie bei den bekannten Vollwellen-Konstruktionen oder Hohlwellen-Konstruktionen. Die Endscheiben mit Lagerzapfen oder sonstigen Anschlußteilen sind im Verhältnis zu der Größe der gesamten Zahnradeinheit relativ kleinvolumig, so daß die Probleme beim Gießen, Schmieden und Härten und im Betrieb durch Fliehkraft- und Temperaturspannungen vermieden werden können.

Wenn dennoch neben der Zwei-Scheiben-Lösung auch eine Ausführungsform mit nur einer Endscheibe angesprochen wird, so deshalb, weil auch die Schaffung einer Zahnradeinheit, welche fliegend gelagert wird, nicht ausgeschlossen sein soll. Weiterhin soll nicht ausgeschlossen sein, daß ein Verzahnungsträgermantel einendig mit einer Endscheibe hergestellt wird und an dem anderen, dann offenen Ende mit einer Endscheibe verbunden wird. Auch bei einer solchen Lösung sind die Probleme des Gießens, Schmiedens und Härtens und im Betrieb durch Fliehkraft- und Wärmespannungen weitgehend reduziert.

Die Endscheibe kann gemäß Anspruch 3 einstückig mit dem Lagerzapfen oder sonstigem Anschlußteil hergestellt werden. Aufgrund der Geometrie einer aus Endscheibe und Lagerzapfen bestehenden Komponente ergeben sich erleichterte Bedingungen für das Gießen, Schmieden und Härten.

Nach Anspruch 4 ist vorgesehen, daß die Endscheibe - in einer die Achse der Zahnradeinheit enthaltenden Schnittebene betrachtet - im radialen Zwischenbereich zwischen dem Außendurchmesser des Lagerzapfens bzw. Anschlußteils und dem Innendurchmesser des Verzahnungsträgermantels einen von einer achsnormalen Ebene abweichenden Wandverlauf besitzt. Diese Maßnahme wird angewandt insbesondere im Hinblick auf die Unschädlichmachung von Fliehkräften. Wenn erfindungsgemäß ein Verzahnungsträgermantel vorgesehen ist, also ein hohles Rohr, so ist dieses naturgemäß gegen die Fliehkräfte, die in einem schnell laufenden Betrieb auftreten, sensibler als eine Zahnradeinheit der Vollwellen-Bauart. Andererseits sind Endscheiben, die im Zentrum geschlossen sind oder bis zu einem kleinen Durchmesser entsprechend dem Lagerzapfendurchmesser radial einwärts verlaufen, gegen Fliehkräfte naturgemäß weniger sensibel, d.h. sie unterliegen weniger einer radialen Durchmesservergrößerung unter Fliehkrafteinwirkung. Dies könnte zu Spannungen in der Anschlußzone zwischen Endscheibe und Verzahnungsträgermantel führen. Eine Möglichkeit, um hier Abhilfe zu schaffen, besteht darin, daß man für ein elastisches Verhalten der Endscheibe unter Fliehkraftbelastung sorgt. Ein solches elastisches Verhalten kann durch die Maßnahmen des Anspruchs 4 erzielt werden. Dieser Gedanke kann entsprechend Anspruch 5 dahingehend weitergebildet werden, daß - in einer die Achse der Zahnradeinheit enthaltenden Schnittebene betrachtet - der Wandverlauf und die Masseverteilung der Endscheibe derart sind, daß fliehkraftbedingte radiale Verlagerungen des endscheibenseitigen Verbindungsbereichs und des verzahnungsträgerseitigen Verbindungsbereichs unabhängig von der Verbindung der beiden Verbindungsbereiche einander angenähert sind.

Außerdem ist gemäß Anspruch 6 eine Weiterbildung dahingehend möglich, daß - in einer die Achse der Zahnradeinheit enthaltenden Schnittebene betrachtet - der Wandverlauf der Endscheibe im Radialbereich zwischen dem Außendurchmesser des Lagerzapfens bzw. Anschlußteils einerseits und dem Verzahnungsträgermantel andererseits eine zum Inneren des Verzahnungsträgermantels hin konvexe Krümmung besitzt.

Eine andere Möglichkeit zur Geringhaltung fliehkraftbedingter Spannungen im Verbindungsbereich zwischen Endscheibe und Verzahnungsträgermantel besteht entsprechend Anspruch 7 darin, daß die Endscheibe mit einer die Verbindungsstelle zum Verzahnungsträgermantel radial überragenden Ausgleichsmasse ausgeführt ist. Durch die Ausgleichsmasse wird erreicht, daß die Endscheibe trotz ihres sich im Vergleich zum Verzahnungsträgermantel weiter nach radial einwärts erstreckenden Materials an der Verbindungsstelle eine ähnliche oder gleiche Ausdehnung unter Fliehkraft erleidet wie der Verzahnungsträgermantel.

Es bestehen verschiedene Möglichkeiten, um die Endscheibe mit dem Verzahnungsträgermantel zu verbinden; so ist es gemäß Anspruch 8 möglich, daß die Endscheibe an der Verbindungsstelle mit dem Verzahnungsträgermantel verschweißt ist; weiterhin ist es gemäß Anspruch 9 möglich, daß die Endscheibe an der Verbindungsstelle mit dem Verzahnungsträgermantel in drehmomentübertragender oder/und zentrierender Formschlußverbindung oder Kraftschlußverbindung steht, wobei als interessante Version einer drehmomentübertragenden und zentrierenden Formschlußverbindung eine Hirth-Verzahnung in Frage kommt.

Die axiale Verbindung, die u.U. auch der Zentrierung dienen kann, ist gemäß Anspruch 10 auch in der Weise möglich, daß die Endscheibe an der Verbindungsstelle mit dem Verzahnungsträgermantel axial verspannt ist, wobei zur axialen Verspannung der Endscheibe mit dem Verzahnungsträgermantel axiale Spannmittel im Radialbereich der Verbindungsstelle vorgesehen sein können (Anspruch 11) oder auch radial innerhalb der Verbindungsstelle (Anspruch 12), insbesondere im Achsbereich der Zahnradeinheit (Anspruch 13).

Neben der bereits erwähnten Hirth-Verzahnung können gemäß Anspruch 14 auch andere Zentriermittel zwischen Endscheibe und Verzahnungsträgermantel vorgesehen sein.

Bei allen Verbindungsarten zwischen Endscheibe und Verzahnungsträgermantel ist darauf zu achten, daß durch die Verbindung an sich nicht Anlaß zu neuem schädlichem Spannungsaufbau gegeben wird.

Für die Endscheiben und die gewünschtenfalls mit ihnen verbundenen Lagerzapfen kann grundsätzlich einsatzgehärteter Stahl verwendet werden. Es ist aber auch möglich, für die Endscheiben Vergütungsstahl anzuwenden, denn die Anforderungen an das Zahneingriffsverhalten des Zahnkranzes, die für den Verzahnungsträgermantel die Verwendung von einsatzgehärtetem Stahl verlangen, bestehen an den Endscheiben und an den Lagerzapfen in der Regel nicht.

Prinzipiell ist es auch möglich, den vorgeschlagenen Verzahnungsträgermantel aus hochvergütetem Vergütungs- oder Nitrierstahl herzustellen. Auch hier ergibt sich durch diese Bauweise eine Präzisierung der Spannungen.

Wie schon im Stand der Technik gemäß der oben zitierten BHS-Veröffentlichung mit dem Veröffentlichungsvermerk H-3/1-87 ist es entsprechend Anspruch 15 möglich, daß mindestens einer von zwei Lagerzapfen bzw. Anschlußteilen hohl ausgeführt ist und daß eine der Zahnradeinheit zugeordnete Welle durch den hohl ausgebildeten Lagerzapfen bzw. Anschlußteil hindurchgeführt ist und mit der Zahnradeinheit innerhalb des Verzahnungsträgermantels oder im Bereich eines gegenüberliegenden Lagerzapfens bzw. Anschlußteils in drehmomentübertragender Verbindung steht. Auf diese Weise kann man auch bei der erfindungsgemäßen Zahnradeinheit die Möglichkeit schaffen, durch Verlängerung der zugeordneten Welle die Torsionssteifigkeit des Getriebezuges zu beeinflussen. Die BHS-Veröffentlichung H-3/1-87 läßt den Unterschied zwischen dem Grundgedanken der vorliegenden Erfindung auch insofern deutlich erkennen, als auf Seite 11 der Veröffentlichung eine Hohlwellen-Bauart gezeigt ist, wobei die Lagerzapfen einstückig mit dem Scheibenkörper hergestellt sind, so daß trotz des Ausbohrens die Probleme des Gießens, Schmiedens und Härtens fortbestehen, zusätzlich aber die Betriebsspannungen durch Fliehkraft- und Wärmespannungen gerade im Bohrungsbereich deutlich höher sind.

Der Erfindungsvorschlag ist unabhängig von der Gestaltung der Außenverzahnung anwendbar, beispielsweise kann die Verzahnung als GeradVerzahnung, als Schräg-Verzahnung und als Doppel-Schräg-Verzahnung gemäß Anspruch 16 ausgebildet sein.

Die dünnwandige Gestaltung der erfindungsgemäßen Zahnradeinheit erlaubt es gemäß Anspruch 17, daß in dem Verzahnungsträger nahe der Außenverzahnung kühlmittelbeaufschlagte oder/und kühlmittelführende Kühlflächen vorgesehen sind. Dies ist bedeutsam, weil insbesondere bei schnell laufenden Zahnradeinheiten eine hohe Wärmeentwicklung im Eingriffsbereich mit einer Gegenverzahnung auftritt, die zu Wärmegradienten innerhalb der Zahnradeinheit führen kann. Gelingt es, die Wärme abzuführen, so wird der Gradientenverlauf flacher. Dies bedeutet geringere resultierende Wärmespannungen und vor allem ein wesentlich stabileres Verhalten des Verzahnungstragbildes. Aus letzterem folgt eine gleichmäßigere Belastung der Zähne und damit entweder eine höhere Belastbarkeit oder eine höhere Zahnsicherheit.

Bei der Ausführung mit Verzahnungsträgermantel besteht gemäß Anspruch 18 die Möglichkeit, daß die kühlmittelbeaufschlagten oder/und kühlmittelführenden Kühlflächen einen Kühlmantel umfassen, welcher radial innerhalb des Verzahnungsträgermantels angeordnet ist. Es können in Anpassung an das Profil des Wärmeanfalls verschiedene Kühlmittel-Flußbilder erzeugt werden. So ist es gemäß Anspruch 19 möglich, daß die kühlmittelführenden Kühlflächen eine Kühlmittelströmung im wesentlichen parallel zur Achsrichtung der Zahnradeinheit bewirken; weiter ist es gemäß Anspruch 20 möglich, daß die kühlmittelführenden Kühlflächen eine Kühlmittelströmung mit schraubenförmigem Verlauf um die Achse der Zahnradeinheit bewirken; weiter ist es gemäß Anspruch 21 möglich, daß die kühlmittelführenden Kühlflächen eine Kühlmittelströmung bewirken, welche mindestens einmal durchgehend über die axiale Länge der Außenverzahnung verläuft.

Auch sind verschiedene Kombinationen von Zu- und Abfluß wiederum in Anpassung an das Profil des Wärmeanfalls möglich. So ist es gemäß Anspruch 22 möglich, daß die kühlmittelführenden Kühlflächen eine Kühlmittelströmung bewirken, welche von den beiden axialen Enden der Außenverzahnung zu einem axial mittleren Bereich der Außenverzahnung verläuft; weiter ist es gemäß Anspruch 23 möglich, daß die kühlmittelführenden Kühlflächen eine Kühlmittelströmung bewirken, welche von einem axial mittleren Bereich der Außenverzahnung zu den beiden axialen Enden der Außenverzahnung verläuft; weiter ist es gemäß Anspruch 24 möglich, daß die Kühlmittelströmung im axial mittleren Bereich der Außenverzahnung, vorzugsweise im Bereich einer axial mittleren Unterbrechung der Außenverzahnung, durch den Verzahnungsträgermantel hindurch in den Umgebungsbereich der Außenverzahnung geführt ist.

Eine einfache Möglichkeit der Kühlmittelführung besteht entsprechend Anspruch 25 darin, daß der Kühlmantel auf seiner der Innenumfangsfläche des Verzahnungsträgermantels zugekehrten Außenoberfläche distanzhaltende oder/und kühlmittelführende Rippen besitzt. Zusätzlich und/oder alternativ ist es aber auch möglich, daß Rippen an der Innenseite des Verzahnungsträgermantels angeordnet sind. Letzere Möglichkeit ist aus herstellungstechnischen Gründen aber weniger bevorzugt.

Entsprechend den jeweils erwünschten Kühlmittelflußbildern ist es gemäß Anspruch 26 möglich, daß die Rippen im wesentlichen achsparallel zu der Achse der Zahnradeinheit verlaufen oder gemäß Anspruch 27 möglich, daß die Rippen schraubenförmig um die Achse der Zahnradeinheit verlaufen.

Es ist möglich und vorteilhaft, aber nicht notwendig, daß der Verzahnungsträgermantel von mindestens einem einstückigen Rohrabschnitt gebildet ist (Anspruch 28). Dabei tritt die von der Erfindung angestrebte Wirkung in hohem Maße ein, wenn gemäß Anspruch 29 bei Rohrabschnittaußendurchmessern (Verzahnungsdurchmessern) von 900 mm und mehr die radiale Dicke des Rohrabschnitts kleiner ist als 200 mm, vorzugsweise kleiner als 150 mm, wobei bei Rohrabschnittaußendurchmessern (Verzahnungsdurchmessern) von kleiner als 900 mm die radiale Dicke im Verhältnis der Rohrabschnittaußendurchmesser zu 900 mm abnehmen kann. Anders ausgedrückt ist es erfindungsgemäß vorteilhaft, wenn gemäß Anspruch 30 die radiale Dicke des Rohrabschnitts kleiner ist als 30 % des Rohrabschnittaußendurchmessers (Verzahnungsdurchmesser), vorzugsweise kleiner als 20 %.

Weiter lassen sich die geometrischen Beziehungen auch dahingehend darstellen, daß gemäß Anspruch 31 die radiale Dicke des Rohrabschnitts abzüglich der Verzahnungshöhe größer als das Vierfache des Normalmoduls der Verzahnung, vorzugsweise größer als das Achtfache des Normalmoduls der Verzahnung, ist. Die vorstehend angegebenen Wandstärkenvorschriften für den Verzahnungsträgermantel sind auch darauf abgestellt, daß die Verbindungen mit Endscheiben ohne das Auftreten zusätzlicher gefährlicher Spannungen hergestellt werden können.

Im vorliegenden wird nun die zweite Alternative der Erfindung behandelt, die auf eine axiale Unterteilung des Verzahnungsträgers gerichtet ist.

Es können zwei oder mehr Verzahnungsträgerscheiben aufeinander folgen (Anspruch 32), wobei die axiale Dicke der Verzahnungsträgerscheiben kleiner ist als 200 mm, vorzugsweise kleiner als 150 mm. Besonders günstige Zutrittsmöglichkeiten von Wärmebehandlungen und sonstige Behandlungen zum Gesamtvolumen des Verzahnungsträgers ergeben sich dann, wenn gemäß Anspruch 33 der Verzahnungsträgermantel von in axialer Richtung aufeinander folgenden und mittelbar oder unmittelbar miteinander verbundenen Verzahnungsträger-Ringscheiben gebildet ist.

Eine Unterteilung in Axialabschnitte ist gemäß Anspruch 34 selbst dann möglich, wenn eine über mehrere Scheiben hinweg durchgehende Verzahnung vorgesehen ist. Man muß dann allerdings auf besonders exakte gegenseitige Zentrierung der Scheiben durch Zentriermittel, wie Hirth-Verzahnungen, achten, damit an den Stoßstellen im Verzahnungsbereich kein wesentlich erhöhter Zahnverschleiß eintritt.

Die Unterteilung in axial benachbarte Scheiben bietet sich aber insbesondere dann an, wenn die Außenverzahnung aus zahntechnischen Gründen selbst in axialer Richtung ein- oder mehrfach unterteilt ist, wie dies z.B. bei Pfeilverzahnungen der Fall ist. Dann wird man die Unterteilung der Scheiben mit der axialen Unterteilung der Außenverzahnungslänge zusammenfallen lassen.

Die zweite Alternative der Erfindung (axial aufeinander folgende Verzahnungsträgerscheiben) läßt sich auch in der Weise verwirklichen, daß die Zahnradeinheit gemäß Anspruch 36 eine Welle mit einem Radialflansch umfaßt und daß beidseitig des Radialflansches je eine Verzahnungsträger-Ringscheibe angebracht ist. Auch bei einer solchen Bauweise ergeben sich verhältnismäßig gleichmäßige und kurze Wege für die Einwirkung einer Behandlung auf das Gesamtvolumen der die Zahnradeinheit bildenden Teile. Dabei ist es möglich, daß gemäß Anspruch 37 die Verzahnungsträger-Ringscheiben mit dem Radialflansch durch je eine drehmomentübertragende oder/und zentrierende Formschlußverbindung und axiale Verspannungsmittel verbunden sind.

Bei der ringförmigen Gestaltung von axial aufeinander folgenden Verzahnungsträgerscheiben werden bevorzugt die Maßangaben gemäß Anspruch 38 eingehalten dahingehend, daß die radiale Dicke der Verzahnungsträger-Ringscheiben und die axiale Dicke der Verzahnungsträger-Ringscheiben kleiner ist als 300 mm, vorzugsweise kleiner als 200 mm.

Die erfindungsgemäße Gestaltung der Zahnradeinheit erlaubt es gemäß Anspruch 41, daß in Verzahnungsnähe, insbesondere an der Innenumfangsfläche des Verzahnungsträgermantels, Temperatur-Sensorelemente, insbesondere Thermoelemente, anbringbar sind. Dies ist nicht nur von Vorteil, weil auf diese Weise Gefahrenzustände angezeigt werden können. Es ist vielmehr auch möglich, beispielsweise bei Vorhandensein einer Strömungsmittelkühlung, den Kühlmitteldurchsatz in Abhängigkeit von den gemessenen Temperaturen zu regeln.

Die erfindungsgemäße Gestaltung nach beiden Alternativen des Anspruchs 1 läßt sich gemäß Anspruch 42 ohne weiteres dahingehend erweitern, daß die Zahnradeinheit wenigstens einen Druckkamm und/oder einen Druckkamm-Eingriffsring aufweist, insbesondere als Teil einer Endscheibe oder einer an einer Endscheibe angebrachten Ausgleichsmasse.

Die beiliegenden Figuren erläutern die Erfindung anhand von Ausführungsbeispielen. Es stellen dar:
- Fig. 1: eine Teilansicht eines Stirnradgetriebes mit erfindungsgemäß auszugestaltenden Stirnrädern;
- Fig. 2: eine erste Ausführungsform einer erfindungsgemäß gestalteten Zahnradeinheit im achsenthaltenden Längsschnitt;
- Fig. 3: eine Abwandlung der Ausführungsform nach Fig. 2;
- Fig. 4: eine zweite Ausführungsform einer erfindungsgemäßen Zahnradeinheit im achsenthaltenden Längsschnitt;
- Fig. 5: eine Abwandlung zu Fig. 4;
- Fig. 6: eine erfindungsgemäße Zahnradeinheit nach einer dritten Ausführungsform im achsenthaltenden Längsschnitt;
- Fig. 7: eine erfindungsgemäße Zahnradeinheit nach einer vierten Ausführungsform der Erfindung im achsenthaltenden Längsschnitt;
- Fig. 8: eine fünfte Ausführungsform einer erfindungsgemäßen Zahnradeinheit als Teil eines Stirnradgetriebes;
- Fig. 9: eine Ausführungsform entsprechend der Fig. 2 mit Mantelkühlung;
- Fig. 9a - 9d: verschiedene Varianten der Mantelkühlung;
- Fig. 10 und 11: verschiedene Kühlmantelformen;
- Fig. 12: eine Ausführungsform ähnlich derjenigen nach Fig. 6 mit einem Druckkamm an einer Endscheibe;
- Fig. 13: eine sechste Ausführungsform einer erfindungsgemäßen Zahnradeinheit im achsenthaltenden Längsschnitt; und
- Fig. 14: eine Ausführungsform ähnlich derjenigen nach Fig. 12 mit jeweils zwei Druckkämmen an Zahnradeinheit und Gegenstirnrad.

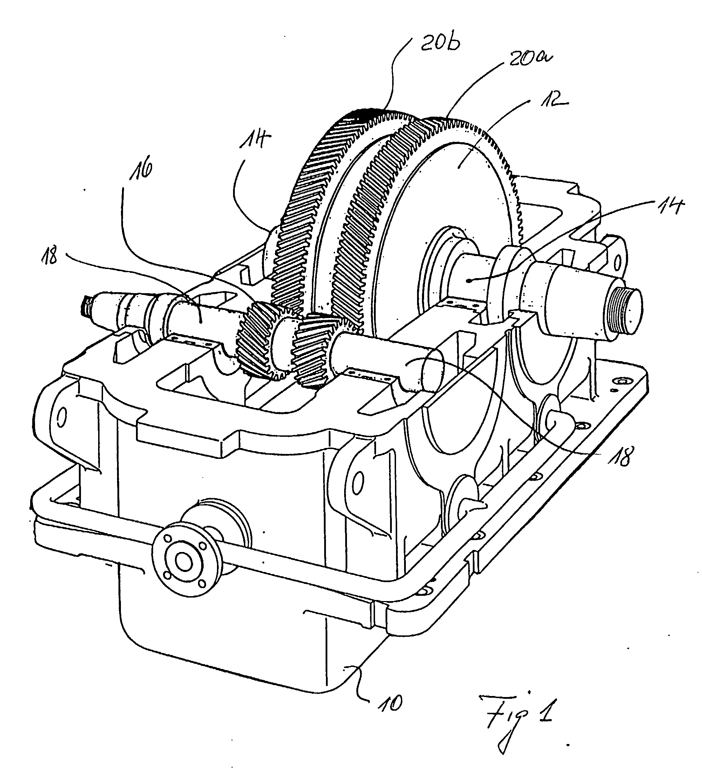

Gemäß Fig. 1 ist in einem Getriebegehäuse 10, dessen Unterteil dargestellt ist, ein großes Stirnrad 12 mittels Lagerzapfen 14 gelagert. Dieses große Stirnrad 12 kämmt mit einem kleinen Stirnrad 16, welches mittels Lagerzapfen 18 ebenfalls in dem Getriebegehäuse gelagert ist. Man erkennt, daß beide Stirnräder 12 und 16 als sogenannte doppelschrägverzahnte Stirnräder ausgebildet sind, um eine axiale gegenseitige Festlegung zu erreichen. An dem großen Stirnrad 12 erkennt man dementsprechend zwei Stirnverzahnungen 20a und 20b.

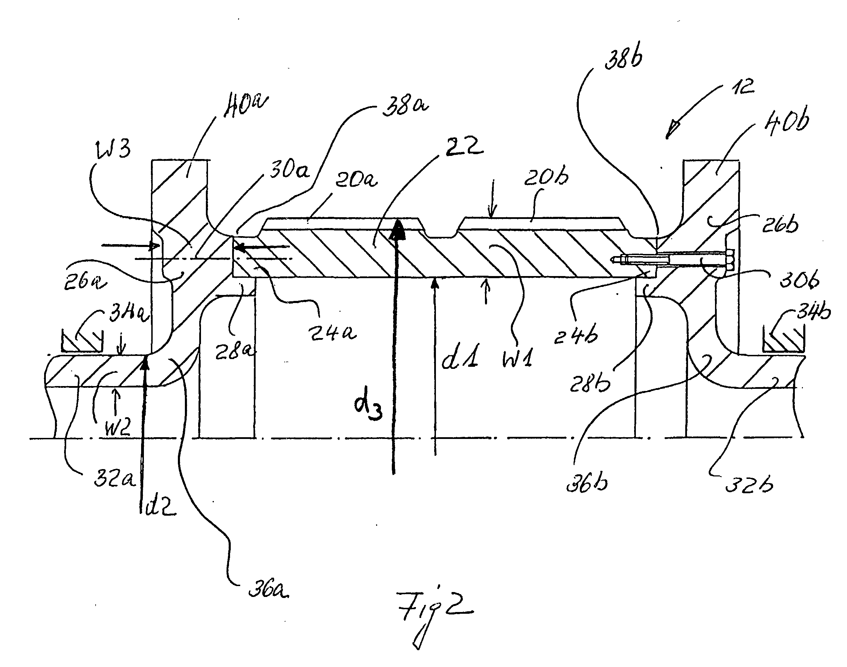

Die in Fig. 2 dargestellte Stirnradeinheit 12 entspricht beispielsweise dem großen Stirnrad 12 der Fig. 1. Diese Stirnradeinheit 12 besteht aus einem Verzahnungsträgermantel 22, auf dem die beiden Schrägverzahnungen 20a und 20b gemäß Fig. 1 angebracht sind. Die Enden 24a und 24b des Verzahnungsträgermantels 22 sind mit je einer Endscheibe 26a bzw. 26b verbunden. Sie sind durch Zentrieransätze 28a und 28b gegenüber den Endscheiben zentriert und in axialer Richtung durch Schraubenbolzen 30a bzw. 30b festgespannt. An den Endscheiben 26a und 26b sind Lagerzapfen 32a bzw. 32b angeformt, die in Lagern 34a bzw. 34b gelagert sind.

Der Verzahnungsträgermantel 22 ist in der eingangs beschriebenen Weise durch Gießen, Schmieden, Spanen, dazwischen liegende Wärmebehandlungen und Einsatzhärten hergestellt, während die Endscheiben 26a,26b mit den Lagerzapfen 32a,32b aus Vergütungsstahl hergestellt sein können. Die Endscheiben 26a,26b gehen über gerundete Übergangskrümmungen 36a,36b in die Lagerzapfen 32a,32b über, wodurch eine radiale Elastizität der Endscheiben 26a,26b erreicht wird, so daß die Endscheiben 26a,26b etwaigen fliehkraftbedingten Durchmesservergrößerungen des Verzahnungsträgermantels 22 durch elastische Verformung der Übergangskrümmungen 36a,36b folgen können und damit Radialspannungen an den Verbindungsstellen 38a,38b gering gehalten werden können. Überdies sind die Endscheiben 26a,26b einstückig mit Ringfortsätzen 40a,40b versehen, die so bemessen sind, daß sie bei Rotation für eine Gleichheit oder annähernde Gleichheit der fliehkraftbedingten Radialvergrößerung an den Endscheiben 26a,26b einerseits und an dem Verzahnungsträgermantel 22 andererseits sorgen.

Zu beachten ist, daß der Innendurchmesser d1 des Verzahnungsträgermantels 22 wesentlich größer ist als der Durchmesser d2 der Lagerzapfen 32a,32b. Dieser Durchmesserunterschied zwischen d1 und d2 ist wesentlich mitverantwortlich für die Dünnwandigkeit w1,w2,w3 in allen Bereichen der Zahnradeinheit 12. Man erkennt durch Vergleich der Fig. 2 mit der Seite 11, oberes Bild der bereits mehrfach zitierten Druckschrift BHS-H-3/1-87 einen wesentlichen Unterschied, der darin liegt, daß gemäß Fig. 2 der Innendurchmesser d1 wesentlich größer ist als der Durchmesser d2. Dieser Unterschied ist für die Bereitstellung der gleichmäßig geringen Wandstärken w1-w3 verantwortlich. Das gemäß der oberen Fig. auf Seite 11 der BHS-Druckschrift H-3/1-87 angewandte Ausbohren einer Vollwellen-Konstruktion würde, wie der Vergleich weiter zeigt, niemals zu den günstigen Wandstärkenverhältnissen gemäß Fig. 2 führen. Die Wandstärke w1 gemäß Fig. 2 ist bei einem Rohrabschnittaußendurchmesser d3 von 900 mm beispielsweise 150 - 200 mm. Die Wandstärken w2 und w3 ergeben sich aus Maßstabvergleich.

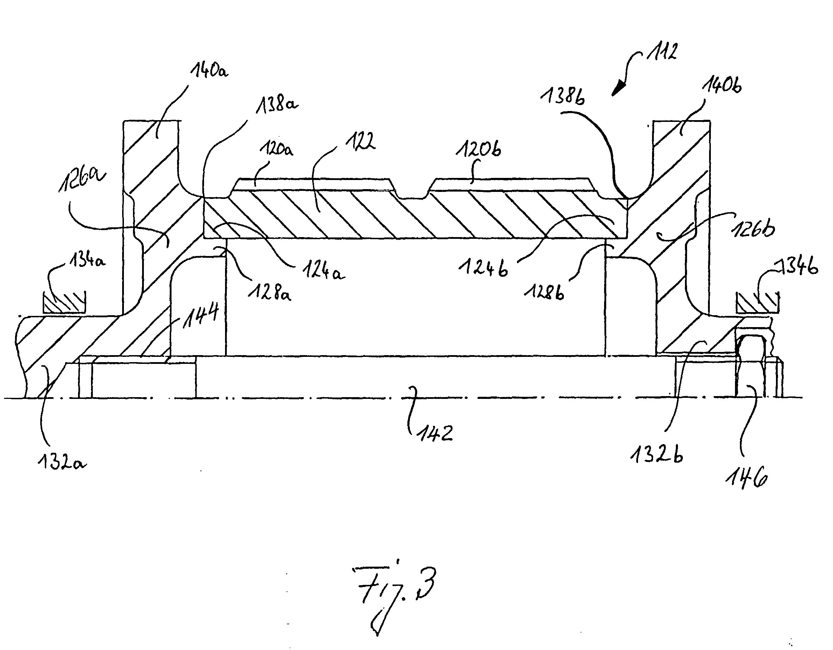

In der Ausführungsform gemäß Fig. 3 sind analoge Teile mit gleichen Bezugszeichen wie in Fig. 1, jeweils vermehrt um die Zahl 100, versehen.

Man erkennt, daß gemäß Fig. 3 der axiale Zusammenhalt der beiden Endscheiben 126a und 126b durch einen Spannstab 142 hergestellt ist, der mit der Endscheibe 126a bei 144 verschraubt ist und weiterhin mit einer gegen die Endscheibe 126b unter Spannung anliegende Mutter 146 verschraubt ist.

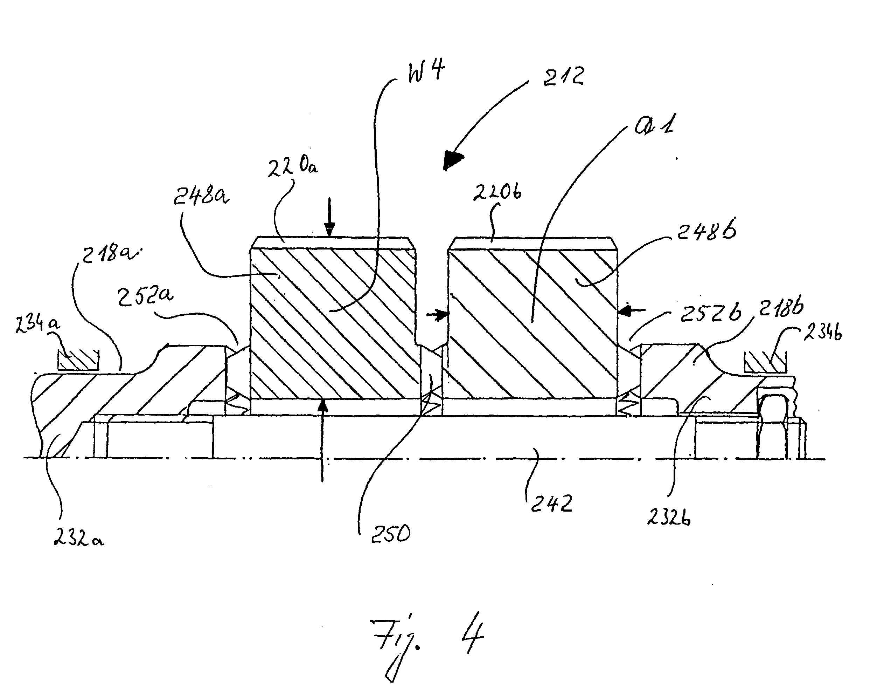

Gemäß Fig. 4 ist die Zahnradeinheit 212 von zwei Verzahnungsträgerscheiben 248a und 248b gebildet, die unter Vermittlung von Hirth-Verzahnungen 250 gegeneinander zentriert sind. An jeder der Verzahnungsträgerscheiben 248a und 248b liegen über Hirth-Verzahnungen 252a und 252b Lagerzapfen 232a und 232b an, welche durch einen Spannstab 242 gegen die jeweils anliegenden Verzahnungsträgerscheiben 248a bzw. 248b verspannt sind. Die radialen Ringdickenmaße w4 und die Axialdickenmaße a1 können gering gehalten werden, beispielsweise in der Größenordnung von 350 mm, so daß wiederum jedes Volumenelement der einzelnen Komponenten relativ nahe bei der jeweils nächstgelegenen Oberfläche liegt und damit Wärme- und sonstigen Behandlungen gut zugänglich ist.

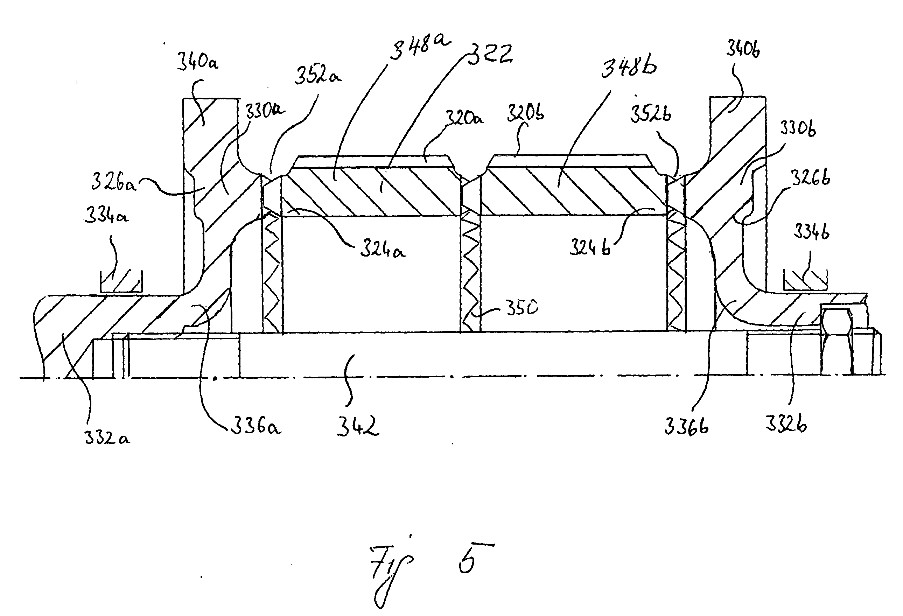

Die Ausführungsform nach Fig. 5 stellt eine Kombination aus den Ausführungsformen gemäß Fig. 3 und Fig. 4 dar. Hier gelingt es, den großen Materialblock, nämlich den Verzahnungsträgermantel 322, zusammengesetzt aus den Ringscheiben 348a und 348b, auf geringstes Volumen zu reduzieren, so daß besonders günstige Verhältnisse bezüglich äußerer Behandlungszugänglichkeit für jedes Volumenelement innerhalb der Ringscheiben 348a,348b besteht. Analoge Teile und Formungen zu den Ausführungsformen nach Fig. 3 und 4 sind mit den gleichen Bezugszeichen versehen wie dort, jedoch jeweils mit der Vorziffer 3.

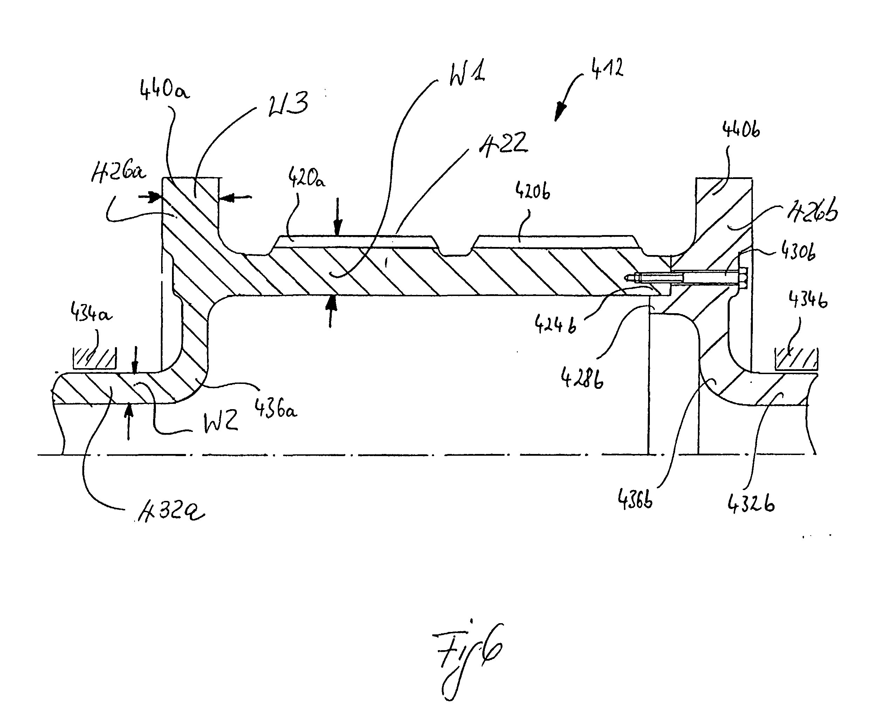

In Fig. 6 ist eine weitere Alternative zu Fig. 2 dargestellt. Analoge Teile sind mit den gleichen Bezugszeichen wie dort jeweils unter Voransetzung der Ziffer 4 bezeichnet. Bei dieser Ausführungsform ist der Mantel 422 mit der einen Endscheibe 426a einstückig ausgebildet, während die andere Endscheibe 426b, so wie in Fig. 2, am Verzahnungsträgermantel 422 befestigt ist. Man erkennt, daß sich selbst bei der einstückigen Zusammenfassung des Verzahnungsträgermantels 422 und der Endscheibe 426a durchwegs geringe Wandstärken w1, w2, w3 einstellen. Der kombinierte Radkörper 422, 426a, 432a kann so hergestellt werden, wie in der Beschreibungseinleitung beschrieben.

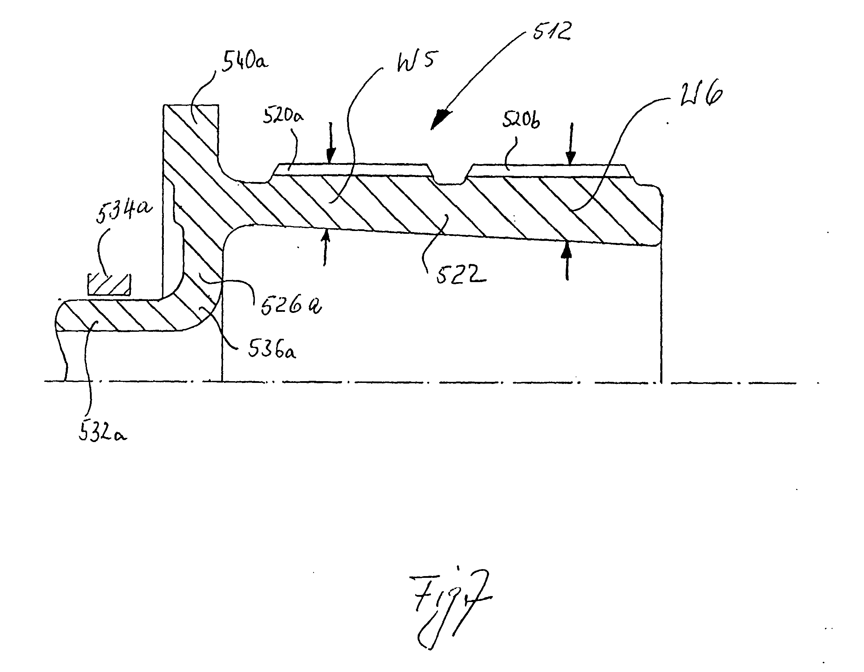

In der Ausführungsform gemäß Fig. 7 ist eine in einem einseitigen Lager 534a fliegend gelagerte Zahnradeinheit 512 dargestellt, bei der die linke Endscheibe 526a einstückig mit dem Verzahnungsträgermantel 522 hergestellt ist und die rechte Endscheibe fehlt. Für die Herstellung gilt das zu Fig. 6 Gesagte. Zu beachten ist, daß die Wandstärken w5 und w6 unterschiedliche Werte haben. Der Wandstärkeunterschied zwischen w5 und w6 zielt darauf ab, gleiche radiale Ausdehnung unter Fliehkraft im linken und im rechten Endbereich des Verzahnungsträgermantels 522 zu erreichen.

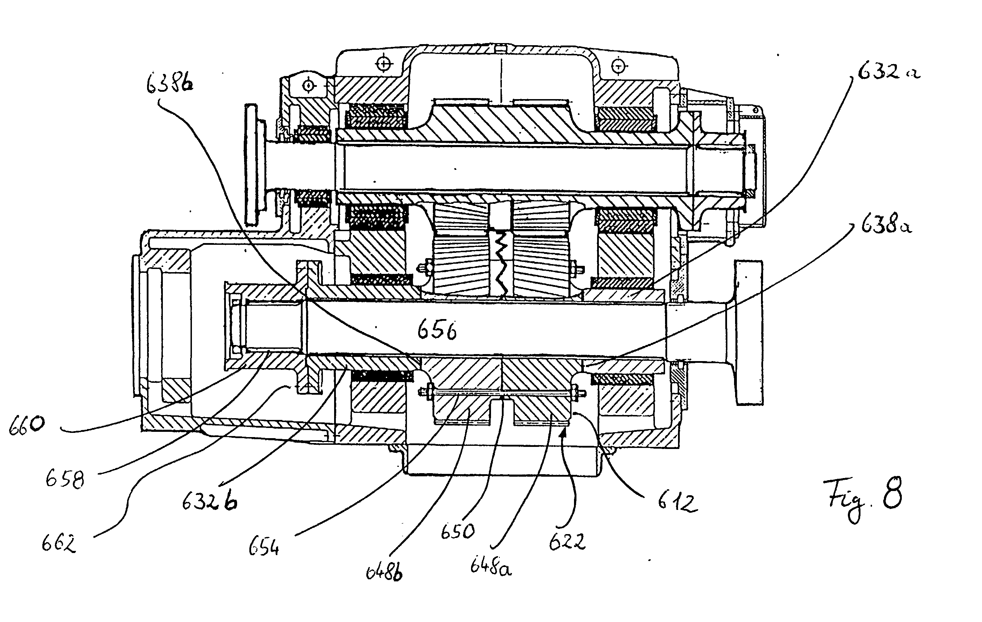

Gemäß Fig. 8 sind zwei Verzahnungsträgerscheiben 648a und 648b durch Zugbolzen 654 und Hirth-Verzahnungen 650 miteinander verbunden und an den Stoßstellen 638a und 638b mit den Lagerzapfen 632a und 632b in beliebiger Weise verbunden, z.B. verschweißt. Man erkennt, daß die ringförmige Gestalt der Verzahnungsträgerscheiben 648a und 648b zur Einführung einer Torsionswelle 656 dient, die beispielsweise durch eine Verzahnung 658 mit einem Anschlußteil 660 drehmomentschlüssig verbunden ist, welches auf den Lagerzapfen 632b bei 662 aufgeflanscht ist. Die Verzahnung 658 kann auch durch eine Verschraubung oder eine anders geartete Kupplung, beispielsweise eine Membrankupplung, ersetzt werden.

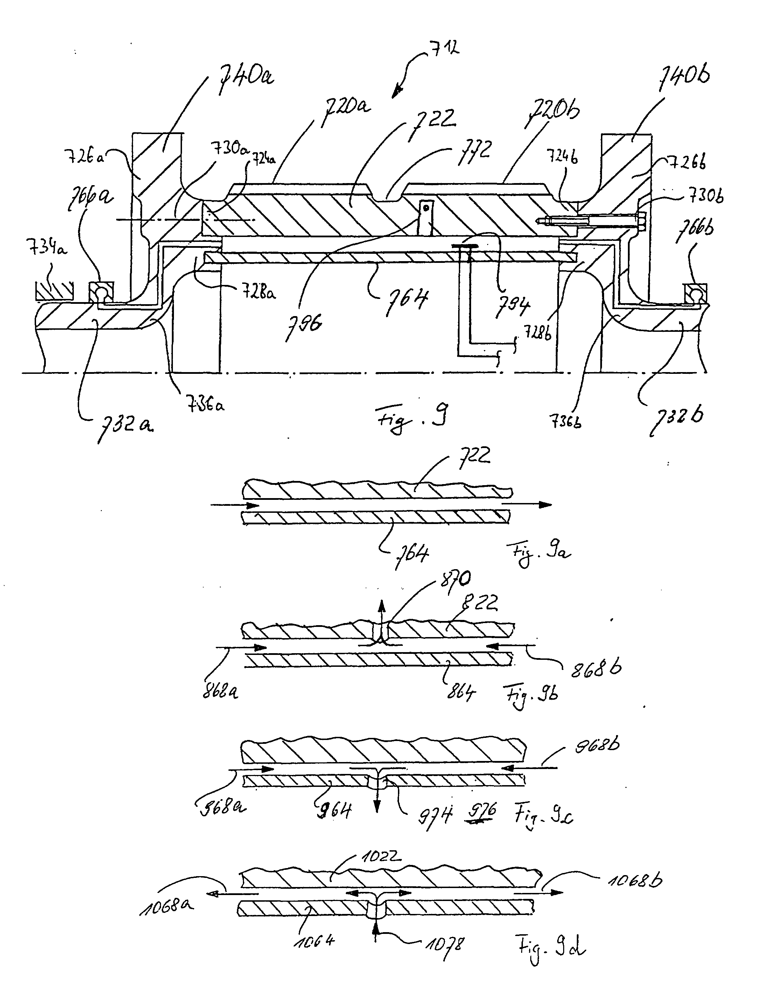

Gemäß Fig. 9 ist innerhalb des Verzahnungsträgermantels 722 ein Kühlmantel 764 angeordnet, der zur Führung eines Kühlmittels dient. Das Kühlmittel kommt von einer ersten Anschlußstelle 766a auf dem Lagerzapfen 732a und fließt zu einer zweiten Anschlußstelle 766b auf dem Lagerzapfen 732b.

Die Strömungsverhältnisse gemäß Fig. 9 sind in Fig. 9a im einzelnen dargestellt.

In Fig. 9b sind die Strömungsverhältnisse insofern verändert, als das Kühlmittel in Richtung der Pfeile 868a und 868b von beiden Enden des Verzahnungsträgermantels 822 her zufließt und im radial mittleren Bereich des Verzahnungsträgermantels durch eine Radialbohrung 870 abfließt, die sich im Bereich einer Eindrehung 772 gemäß Fig. 9 befindet. In diesem Fall ist daran gedacht, als Kühlmittel ein Schmiermittel zu verwenden, das gleichzeitig dazu dient, die Verzahnungen 720a,720b zu schmieren.

In Fig. 9c ist der Kühlmittelfluß insofern verändert, als das Kühlmittel in Richtung der Pfeile 968a und 968b von Fig. 9 entsprechenden Anschlußstellen 766a,766b zuläuft und durch eine Bohrung 974 des Kühlmantels 964 durch den Zentralraum 976 und durch einen der Zapfen 732a, 732b gemäß Fig. 9 abgeleitet werden kann.

Gemäß Fig. 9d fließt das Kühlmittel in Pfeilrichtung 1078 in den Zwischenraum zwischen Kühlmantel 1064 und Verzahnungsträgermantel 1022 ein und fließt in Richtung der Pfeile 1068a und 1068b ab, wiederum beispielsweise über Anschlußstellen 766a, 766b, wie in Fig. 9 dargestellt.

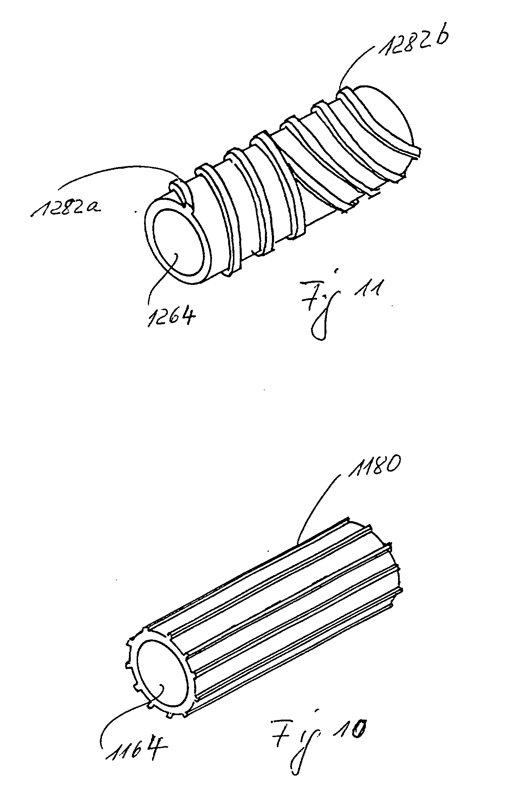

Gemäß Fig. 10 sind an dem Kühlmantel 1164 , der dem Kühlmantel 764 gemäß Fig. 9 entspricht, Führungsrippen 1180 angebracht, die in axialer Richtung verlaufen und eine gerichtete Strömung mit hoher Strömungsgeschwindigkeit begünstigen, etwa entsprechend Fig. 9a.

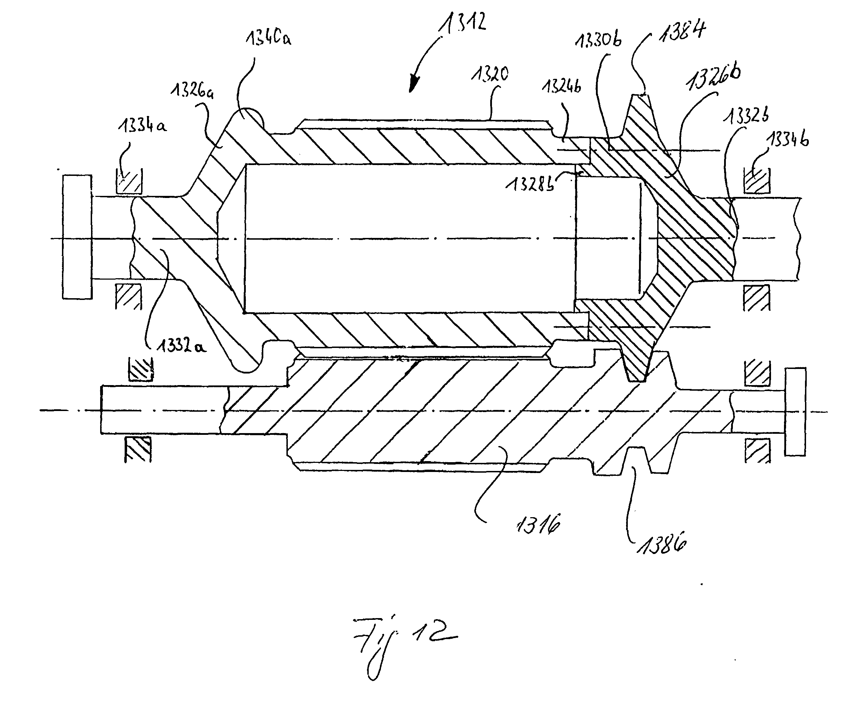

Gemäß Fig. 11 sind an einem Kühlmantel 1264 schraubenförmig verlaufende Führungsrippen 1282a und 1282b gegensinniger Steigung angebracht, die zu einem Strömungsbild gemäß Fig. 9b, 9c oder 9d führen.

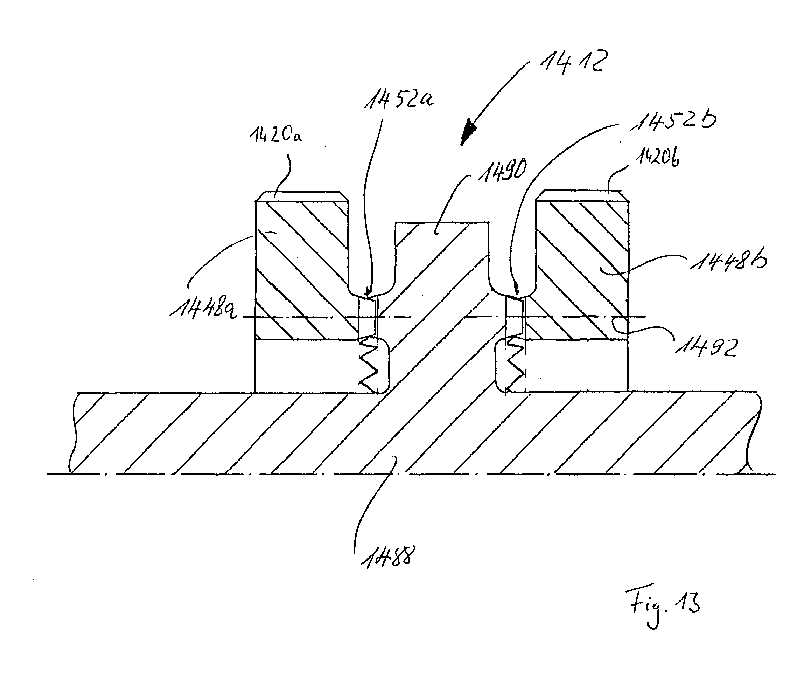

Die Ausführungsform nach Fig. 12 entspricht im wesentlichen der Ausführungsform nach Fig. 6. In Ergänzung zu Fig. 6 ist an der Endscheibe 1326b ein Druckkamm 1384 angebracht, der mit einer ringförmigen Druckkamm-Aufnahmenut 1386 eines Gegenstirnrads 1316 in axialpositionsicherndem Eingriff steht.

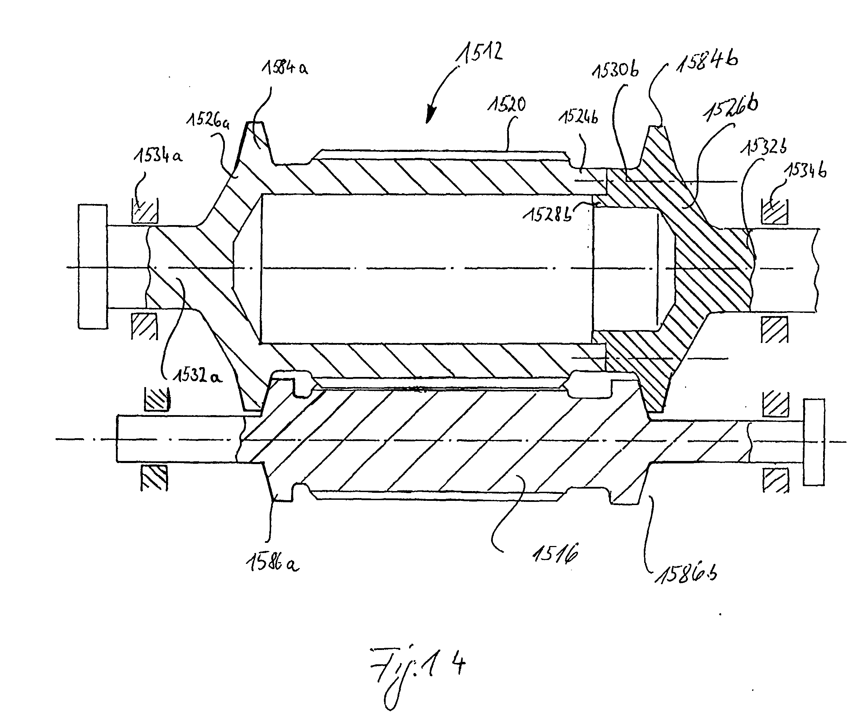

Gemäß Fig. 13 ist eine Welle 1488 mit einem Radialflansch 1490 versehen, an dem unter Verwendung von Hirth-Verzahnungen 1452a und 1452b Verzahnungsträgerscheiben 1448a und 1448b mittels Spannstangen 1492 befestigt sind. Man erkennt ohne weiteres, daß auch hier an sämtlichen Komponenten der Zahnradeinheit 1412 nur geringe Wandstärken auftreten, so daß jedes Volumenelement einer äußeren Wärmebehandlung oder sonstigen Behandlung, z.B. Schmiedebehandlung, auf kurzem Weg zugänglich ist.

Fig. 14 zeigt eine weitere Ausführungsform, welche im wesentlichen der Ausführungsform nach Fig. 12 entspricht. Statt der ringförmigen Druckkammer-Aufnahmenut 1386 aus Fig. 12 sind jedoch jeweils beidseitig der Verzahnung 1520 sowohl an der Zahnradeinheit 1512 als auch am Gegenstirnrad 1516 paarweise miteinander zusammenwirkende Druckkämme 1584a,1586a und 1584b,1586b vorgesehen. Eine derartige Ausgestaltung bringt neben einem axialpositionssichernden Eingriff auch in vorteilhafter Weise eine gleichmäßige Axialkraftübertragung über beide Druckkammpaare 1584a,1586a und 1584b,1586b mit sich.

Die Ausbildung der Lagerzapfen hängt natürlich davon ab, ob der jeweilige Lagerzapfen zur Drehmomentübertragung bestimmt ist oder nicht.

Anstelle des Kühlmantels können natürlich andere Formen von kühlmittelführenden Flächen vorgesehen werden. So wäre es im Falle der Ausführungsform gemäß Fig. 9 ohne weiteres möglich, den Kühlmantel 764 ganz entfallen zu lassen, was allerdings zu einem großen ständigen Ölvolumen innerhalb der Zahnradeinheit führen würde und möglicherweise zu Unwuchten führen könnte. Im Falle der Scheibenausführungsform nach Fig. 5 wäre es auch denkbar, die beiden ringförmigen Verzahnungsträgerscheiben 348a und 348b mit axial aneinander anschließenden Kanalbohrungen zu versehen.

Der Kühlmittelverlauf wird, wie schon mehrfach betont, dem jeweiligen Temperaturprofil angepaßt. Bei Reduktionsgetrieben mit Pfeilverzahnung (Doppelschrägverzahnung) hängt die Temperaturentwicklung davon ab, ob der Pfeil in Drehrichtung verjüngt ist oder entgegen der Drehrichtung verjüngt ist. Ist der Pfeil entgegen der Drehrichtung verjüngt, so entsteht die höchste Zahntemperatur in der Pfeilmitte, so daß man hier das Öl entsprechend Fig. 9d zuführen wird.

Eventuelle unterschiedliche Verzahnungssteifigkeiten über die Verzahnungsbreite können durch Verzahnungskorrektur und/oder auch durch entsprechende Gestaltung und/oder auch durch Variation der radialen Dicke des Verzahnungsträgermantels ausgeglichen werden.

Zur Ausführungsform nach Fig. 9 in Verbindung mit Fig. 9b ist noch folgendes anzumerken: Das in Pfeilrichtung 877 austretende Kühlmittel gelangt im Bereich der Ringnut 772 zusammen mit zusätzlich eingespritztem Verzahnungsschmieröl in die Verzahnungen 720a und 720b und fließt durch diese auf die Ringfortsätze 740a und 740b zu, sofern die Pfeilrichtung in Drehrichtung weist. Das auf die Ringfortsätze 740a auftreffende Schmieröl wird verhältnismäßig sanft aufgenommen und umgelenkt. Die bei Fehlen der Ringfortsätze 740a zu erwartende Kollision des Öls mit dem Getriebegehäusewänden, die zu einer starken Zersprühung führen würde, tritt nicht ein. Damit würde auch der Rückfall von gestreutem Öl in Richtung auf die Verzahnungen 720a und 720b unterdrückt, der zu Leistungsverlusten führen könnte.

Achsnahe Abführung des Öls ist wünschenswert, um Drall- und Druckverluste zu vermeiden.

In Fig. 9 is ein Thermoelement 794 dargestellt, welches die Temperatur im Kühlmittelfluß messen kann. Dieses Thermoelement könnte auch in einer Radialbohrung 796 sitzen, um die Temperatur möglichst nahe der Verzahnung 720b zu messen. Natürlich können auch mehrere Elemente vorhanden sein, um Temperaturprofile zu ermitteln. Dem Thermoelement 794 entsprechende Signale können beispielsweise durch den hohlen Wellenzapfen 732 und entsprechende Übertragungseinrichtungen zu einer Verarbeitungs- und Darstellungseinheit geführt werden.

Die Verzahnungen werden in der Regel auf dem Verzahnungsträgermantel durch spanabhebende Bearbeitung erzeugt.

Die erfindungsgemäßen Zahnradeinheiten kommen beispielsweise in Getrieben mit einer Leistungsübertragung von 50 000 - 100 000 kW zum Einsatz.

Die Getriebe mit erfindungsgemäßen Zahnradeinheiten kommen insbesondere zum Einsatz
zwischen einer Turbine und einem Generator
zwischen einer Turbine und einem Verdichter
zwischen einem Elektromotor und einem Verdichter.

## Patentansprüche

1. Außenverzahnte Zahnradeinheit (12;112;212;312;412;512;612;712;1312;1412;1512) insbesondere für Schwermaschinengetriebe und/oder schnellaufende Getriebe, wie Turbomaschinengetriebe, umfassend einen Verzahnungsträger mit einer an einer Umfangsfläche angebrachten Außenverzahnung (20a,20b;120a,120b;220a,220b;320a,320b;420a,420b;520a,520b; 720a,720b;1320;1420a,1420b;1520) und einen mit dem Verzahnungsträger verbundenen Lagerzapfen (32a,32b;132a,132b;232a,232b;332a,332b;432a,432b;532a;632a, 632b;732a,732b;1332a,1332b;1532a,1532b) oder Anschlußteil, welcher Lagerzapfen (32a,32b;132a,132b;232a,232b;332a,332b;432a,432b;532a;632a, 632b;732a,732b;1332a,1332b;1532a,1532b) oder Anschlussteil an mindestens einem axialen Endbereich (24a,24b;124a,124b;224a,224b;324a,324b;424b;724a,724b;1324b; 1524b) des Verzahnungsträgers diesem Endbereich benachbart und von diesem in axialer Richtung weg verlaufend angeordnet ist,
**dadurch gekennzeichnet,**
**daß** der Verzahnungsträger
entweder
mit einem Verzahnungsträgermantel (22;122;322;422;522;622;722;822;1022) ausgeführt ist, dessen Innendurchmesser (d1) größer ist als der Durchmesser (d2) des Lagerzapfens (32a,32b;132a,132b;232a,232b;332a,332b;432a,432b;532a;632a, 632b;732a,732b;1332a,1332b;1532a,1532b) bzw. Anschlußteils
oder/und
mit einer Mehrzahl von in axialer Richtung aufeinanderfolgenden und miteinander verbundenen Verzahnungsträgerscheiben (248a,248b;348a,348b;648a,648b;1448a,1448b;1548a,1548b) ausgeführt ist.

2. Zahnradeinheit nach Anspruch 1,
**dadurch gekennzeichnet,**
**daß** der Verzahnungsträgermantel (22;122;322;422;522;622;722;822;1022) an mindestens einem Ende (24a,24b;124a,124b;224a,224b;324a,324b;424b;724a,724b;1324b; 1524b), vorzugsweise an beiden Enden, mit einer Endscheibe (26a,26b;126a,126b;326a,326b;426a,426b;526a;726a,726b;1326a, 1326b;1526a,1526b) verbunden ist, in deren Zentralbereich der Lagerzapfen (32a,32b;132a,132b;232a,232b;332a,332b;432a,432b;532a;632a, 632b;732a,732b;1332a,1332b;1532a,1532b) bzw. Anschlußteil angeordnet ist.

3. Zahnradeinheit nach Anspruch 2,
**dadurch gekennzeichnet,**
**daß** die Endscheibe (26a,26b;126a,126b;326a,326b;426a,426b;526a;726a,726b;1326a, 1326b;1526a,1526b) einstückig mit dem Lagerzapfen (32a,32b;132a,132b;232a,232b;332a,332b;432a,432b;532a;632a, 632b;732a,732b;1332a,1332b;1532a,1532b) bzw. Anschlußteil hergestellt ist.

4. Zahnradeinheit nach Anspruch 2 oder 3,
**dadurch gekennzeichnet,**
**daß** die Endscheibe (26a,26b;126a,126b;326a,326b;426a,426b;526a;726a,726b;1326a, 1326b;1526a,1526b) - in einer die Achse der Zahnradeinheit (12;112;212;312;412;512;612;712;1312;1412;1512) enthaltenden Schnittebene betrachtet - im radialen Zwischenbereich (36a, 36b; 336a, 336b; 436a, 436b; 536a; 736a, 736b) zwischen dem Außendurchmesser des Lagerzapfens bzw. Anschlußteils und dem Innendurchmesser (d1) des Verzahnungsträgermantels (22;122;322;422;522;622;722;822;1022) einen von einer achsnormalen Ebene abweichenden Wandverlauf besitzt.

5. Zahnradeinheit nach Anspruch 3 oder 4,
**dadurch gekennzeichnet,**
**daß** - in einer die Achse der Zahnradeinheit (12;112;212;312;412;512;612;712;1312;1412;1512) enthaltenden Schnittebene betrachtet - der Wandverlauf und die Masseverteilung der Endscheibe (26a,26b;126a,126b;326a,326b;426a,426b;526a;726a,726b;1326a, 1326b;1526a,1526b) derart sind, daß fliehkraftbedingte radiale Verlagerungen des endscheibenseitigen Verbindungsbereichs (38a,38b;138a,138b;638a,638b) und des verzahnungsträgerseitigen Verbindungsbereichs unabhängig von der Verbindung der beiden Verbindungsbereiche einander angenähert sind.

6. Zahnradeinheit nach einem der Ansprüche 3 - 5,
**dadurch gekennzeichnet,**
**daß** - in einer die Achse der Zahnradeinheit (12;112;212;312;412;512;612;712;1312;1412;1512) enthaltenden Schnittebene betrachtet - der Wandverlauf der Endscheibe (26a,26b;126a,126b;326a,326b;426a,426b;526a;726a,726b;1326a, 1326b;1526a,1526b) im Radialbereich zwischen dem Außendurchmesser des Lagerzapfens (32a,32b;132a,132b;232a,232b;332a,332b;432a,432b;532a;632a, 632b;732a,732b;1332a,1332b;1532a,1532b) bzw. Anschlußteils einerseits und dem Verzahnungsträgermantel (22;122;322;422;522;622;722;822;1022) andererseits eine zum Inneren des Verzahnungsträgermantels (22;122;322;422;522;622;722;822;1022) hin konvexe Krümmung (36a;36b) besitzt.

7. Zahnradeinheit nach einem der Ansprüche 2 - 6,
**dadurch gekennzeichnet,**
**daß** die Endscheibe (26a,26b;126a,126b;326a,326b;426a,426b;526a;726a,726b;1326a, 1326b;1526a,1526b) mit einer die Verbindungsstelle (38a,38b;138a,138b;638a,638b) zum Verzahnungsträgermantel (22;122;322;422;522;622;722;822; 1022) radial überragenden Ausgleichsmasse (40a,40b;140a,140b;340a,340b;440a,440b;540a;740a,740b;1340a) ausgeführt ist.

8. Zahnradeinheit nach einem der Ansprüche 2 - 7,
**dadurch gekennzeichnet,**
**daß** die Endscheibe (26a,26b;126a,126b;326a,326b;426a,426b;526a;726a,726b;1326a, 1326b;1526a,1526b) an der Verbindungsstelle (38a,38b;138a,138b;638a,638b) mit dem Verzahnungsträgermante (22;122;322;422;522;622;722;822;1022) verschweißt ist.

9. Zahnradeinheit nach einem der Ansprüche 2 - 8,
**dadurch gekennzeichnet,**
**daß** die Endscheibe (26a,26b;126a,126b;326a,326b;426a,426b;526a;726a,726b;1326a, 1326b;1526a,1526b) an der Verbindungsstelle (38a,38b;138a,138b;638a,638b) mit dem Verzahnungsträgermantel (22;122;322;422;522;622;722;822;1022) in drehmomentübertragender oder/und zentrierender Formschlußverbindung (252a,252b;352a,352b;1452a,1452b) oder Kraftschlußverbindung steht.

10. Zahnradeinheit nach Anspruch 9,
**dadurch gekennzeichnet,**
**daß** die Endscheibe (26a,26b;126a,126b;326a,326b;426a,426b;526a;726a,726b;1326a, 1326b;1526a,1526b) an der Verbindungsstelle (38a, 38b; 138a, 138b; 638a, 638b) mit dem Verzahnungsträgermantel (22;122;322;422;522;622;722;822; 1022) axial verspannt ist.

11. Zahnradeinheit nach Anspruch 10,
**dadurch gekennzeichnet,**
**daß** zur axialen Verspannung der Endscheibe (26a,26b;126a,126b;326a,326b;426a,426b;526a;726a,726b;1326a, 1326b;1526a,1526b) mit dem Verzahnungsträgermantel (22;122;322;422;522;622;722;822;1022) axiale Spannmittel (30a,30b;142;242;330a,330b;430b;730a,730b;1330b;1530b) im Radialbereich der Verbindungsstelle (38a,38b;138a,138b;638a,638b) zwischen Endscheibe (26a,26b;126a,126b;326a,326b;426a,426b;526a;726a,726b;1326a, 1326b;1526a,1526b) und Verzahnungsträgermantel (22;122;322;422;522;622;722;822;1022) vorgesehen sind.

12. Zahnradeinheit nach Anspruch 10 oder 11,
**dadurch gekennzeichnet,**
**daß** zur axialen Verspannung der Endscheibe (26a,26b;126a,126b;326a,326b;426a,426b;526a;726a,726b;1326a, 1326b;1526a,1526b) mit dem Verzahnungsträgermantel axiale Spannmittel (30a,30b;142;242;330a,330b;430b;730a,730b;1330b;1530b) radial innerhalb der Verbindungsstelle (38a,38b;138a,138b;638a,638b) zwischen Endscheibe (26a,26b;126a,126b;326a,326b;426a,426b;526a;726a,726b;1326a, 1326b;1526a,1526b) und Verzahnungsträgermantel (22;122;322;422;522;622;722;822;1022) vorgesehen sind.

13. Zahnradeinheit nach Anspruch 12,
**dadurch gekennzeichnet,**
**daß** zur axialen Verspannung der Endscheibe (26a,26b;126a,126b;326a,326b;426a,426b;526a;726a,726b;1326a, 1326b;1526a,1526b) mit dem Verzahnungsträgermantel (22;122;322;422;522;622;722;822;1022) axiale Spannmittel (30a,30b;142;242;330a,330b;430b;730a,730b;1330b;1530b) im Achsbereich der Zahnradeinheit (12;112;212;312;412;512;612;712;1312;1412;1512) vorgesehen sind.

14. Zahnradeinheit nach einem der Ansprüche 2 - 13,
**dadurch gekennzeichnet,**
**daß** an der Endscheibe (26a,26b;126a,126b;326a,326b;426a,426b;526a;726a,726b;1326a, 1326b;1526a,1526b) oder/und an dem Verzahnungsträgermantel (22;122;322;422;522;622;722;822;1022) Zentriermittel (28a,28b;128a,128b;428a,428b;728a,728b;1328b;1528b) vorgesehen sind.

15. Zahnradeinheit nach einem der Ansprüche 1 - 14,
**dadurch gekennzeichnet,**
**daß** mindestens einer von zwei Lagerzapfen (632a,632b) bzw. Anschlußteilen hohl ausgeführt ist und daß eine der Zahnradeinheit (612) zugeordnete Welle (656) durch den hohl ausgebildeten Lagerzapfen (632a) bzw. Anschlußteil hindurchgeführt ist und mit der Zahnradeinheit (612) innerhalb des Verzahnungsträgermantels (622) oder im Bereich eines gegenüberliegenden Lagerzapfens (632b) bzw. Anschlußteils in drehmomentübertragender Verbindung (662) steht.

16. Zahnradeinheit nach einem der Ansprüche 1 - 15,
**dadurch gekennzeichnet,**
**daß** die Außenverzahnung (20a,20b;120a,120b;220a,220b;320a,320b;420a,420b;520a,520b; 720a,720b;1320;1420a,1420b;1520) als eine Geradverzahnung oder als eine Schrägverzahnung oder als eine Doppelschrägverzahnung ausgebildet ist.

17. Zahnradeinheit nach einem der Ansprüche 1 - 16,
**dadurch gekennzeichnet,**
**daß** in dem Verzahnungsträger (722) nahe der Außenverzahnung (720a,720b) kühlmittelbeaufschlagte oder/und kühlmittelführende Kühlflächen vorgesehen sind.

18. Zahnradeinheit nach Anspruch 17,
**dadurch gekennzeichnet,**
**daß** die kühlmittelbeaufschlagten oder/und kühlmittelführenden Kühlflächen einen Kühlmantel (764) umfassen, welcher radial innerhalb des Verzahnungsträgermantels (722) angeordnet ist.

19. Zahnradeinheit nach Anspruch 17 oder 18,
**dadurch gekennzeichnet,**
**daß** die kühlmittelführenden Kühlflächen eine Kühlmittelströmung im wesentlichen parallel zur Achsrichtung der Zahnradeinheit (712) bewirken.

20. Zahnradeinheit nach Anspruch 17 oder 18,
**dadurch gekennzeichnet,**
**daß** die kühlmittelführenden Kühlflächen eine Kühlmittelströmung mit schraubenförmigem Verlauf um die Achse der Zahnradeinheit (712) bewirken.

21. Zahnradeinheit nach einem der Ansprüche 17 - 20,
**dadurch gekennzeichnet,**
**daß** die kühlmittelführenden Kühlflächen eine Kühlmittelströmung bewirken, welche mindestens einmal durchgehend über die axiale Länge der Außenverzahnung (720a,720b) verläuft.

22. Zahnradeinheit nach einem der Ansprüche 17 - 20,
**dadurch gekennzeichnet,**
**daß** die kühlmittelführenden Kühlflächen eine Kühlmittelströmung bewirken, welche von den beiden axialen Enden (724a,724b) der Außenverzahnung (720a,720b) zu einem axial mittleren Bereich der Außenverzahnung (720a,720b) verläuft.

23. Zahnradeinheit nach einem der Ansprüche 17 - 20,
**dadurch gekennzeichnet,**
**daß** die kühlmittelführenden Kühlflächen eine Kühlmittelströmung bewirken, welche von einem axial mittleren Bereich der Außenverzahnung (720a,720b) zu den beiden axialen Enden (724a,724b) der Außenverzahnung (720a,720b) verläuft.

24. Zahnradeinheit nach Anspruch 22
**dadurch gekennzeichnet,**
**daß** die Kühlmittelströmung im axial mittleren Bereich der Außenverzahnung (720a,720b), vorzugsweise im Bereich einer axial mittleren Unterbrechung (772) der Außenverzahnung (720a,720b), durch den Verzahnungsträgermantel (722) hindurch in den Umgebungsbereich der Außenverzahnung (720a,720b) geführt ist.

25. Zahnradeinheit nach einem der Ansprüche 18 - 24,
**dadurch gekennzeichnet,**
**daß** der Kühlmantel (1164; 1264) auf seiner der Innenumfangsfläche des Verzahnungsträgermantels (722) zugekehrten Außenoberfläche distanzhaltende oder/und kühlmittelführende Rippen (1180;1282a,1282b) besitzt oder/und Rippen an der Innenseite des Verzahnungsträgermantels angeordnet sind.

26. Zahnradeinheit nach Anspruch 25,
**dadurch gekennzeichnet,**
**daß** die Rippen (1180) im wesentlichen achsparallel zu der Achse der Zahnradeinheit (712) verlaufen.

27. Zahnradeinheit nach Anspruch 25,
**dadurch gekennzeichnet,**
**daß** die Rippen (1282a, 1282b) schraubenförmig um die Achse der Zahnradeinheit (712) verlaufen.

28. Zahnradeinheit nach einem der Ansprüche 1 - 27,
**dadurch gekennzeichnet,**
**daß** der Verzahnungsträgermantel (22;122;322;422;522;622;722;822;1022) von mindestens einem einstückigen Rohrabschnitt gebildet ist.

29. Zahnradeinheit nach Anspruch 28,
**dadurch gekennzeichnet,**
**daß** bei Rohrabschnittaußendurchmessern (d3) von 900 mm und mehr die radiale Dicke (w1) des Rohrabschnitts kleiner ist als 200 mm, vorzugsweise kleiner als 150 mm, und daß bei Rohrabschnittaußendurchmessern von kleiner als 900 mm die radiale Dicke (w1) im Verhältnis des Rohrabschnittaußendurchmessers zu 900 mm abnehmen kann.

30. Zahnradeinheit nach Anspruch 28 oder 29,
**dadurch gekennzeichnet,**
**daß** die radiale Dicke (w1) des Rohrabschnitts kleiner ist als 30 % des Rohrabschnittaußendurchmessers, vorzugsweise kleiner als 20 %.

31. Zahnradeinheit nach einem der Ansprüche 28 - 30,
**dadurch gekennzeichnet,**
**daß** die radiale Dicke (w1) des Rohrabschnitts abzüglich der Verzahnungshöhe größer als das Vierfache des Normalmoduls der Verzahnung (20a,20b;120a,120b;220a,220b;320a,320b;420a,420b;520a,520b; 720a,720b;1320;1420a,1420b;1520), vorzugsweise größer als das Achtfache des Normalmoduls der Verzahnung (20a,20b;120a,120b;220a,220b;320a,320b;420a,420b;520a,520b; 720a,720b;1320;1420a,1420b;1520) ist.

32. Zahnradeinheit nach Anspruch 1,
**dadurch gekennzeichnet,**
**daß** bei Ausführung des Verzahnungsträgers mit einer Mehrzahl von in axialer Richtung aufeinander folgenden und miteinander verbundenen Verzahnungsträgerscheiben (248a,248b;348a,348b;648a,648b;1448a,1448b;1548a,1548b) die axiale Dicke (a1) der Verzahnungsträgerscheiben (248a,248b;348a,348b;648a,648b;1448a,1448b;1548a,1548b) kleiner ist als 200 mm, vorzugsweise kleiner als 150 mm.

33. Zahnradeinheit nach einem der Ansprüche 1 - 27 und 32,
**dadurch gekennzeichnet,**
**daß** der Verzahnungsträgermantel von in axialer Richtung aufeinander folgenden und mittelbar oder unmittelbar miteinander verbundenen Verzahnungsträger-Ringscheiben (248a,248b;348a,348b;648a,648b;1448a,1448b;1548a,1548b) gebildet ist.

34. Zahnradeinheit nach Anspruch 33,
**dadurch gekennzeichnet,**
**daß** im Fall einer axialen Unterteilung der Außenverzahnung einzelne Axialabschnitte (20a,20b;120a,120b;220a,220b;320a,320b;420a,420b;520a,520b; 720a,720b;1320;1420a,1420b;1520) der Außenverzahnung jeweils einer Verzahnungsträgerscheibe (248a,248b;348a,348b;648a,648b;1448a,1448b;1548a,1548b) oder einem Paket von Verzahnungsträgerscheiben zugeordnet sind.

35. Zahnradeinheit nach Anspruch 34,
**dadurch gekennzeichnet,**
**daß** aufeinander folgende Verzahnungsträgerscheiben (248a,248b;348a,348b;648a,648b;1448a,1448b;1548a,1548b), oder Pakete von Verzahnungsträgerscheiben durch zentrierende oder/und drehmomentübertragende Formschlußmittel (250) miteinander verbunden sind.

36. Zahnradeinheit nach einem der Ansprüche 1 und 32 - 35,
**dadurch gekennzeichnet,**
**daß** sie eine Welle (1488) mit einem Radialflansch (1490) umfaßt und daß beidseitig des Radialflansches (1490) je eine Verzahnungsträger-Ringscheibe (1448a,1448b) angebracht ist.

37. Zahnradeinheit nach Anspruch 36,
**dadurch gekennzeichnet,**
**daß** die Verzahnungsträger-Ringscheiben (1448a,1448b) mit dem Radialflansch (1490) durch je eine drehmomentübertragende oder/und zentrierende Formschlußverbindung (1452a, 1452b) und axiale Verspannungsmittel (1492) verbunden sind.

38. Zahnradeinheit nach einem der Ansprüche 33 - 37,
**dadurch gekennzeichnet,**
**daß** die radiale Dicke (w4) der Verzahnungsträger-Ringscheiben (248a,248b;348a,348b;648a,648b;1448a,1448b;1548a,1548b) und die axiale Dicke (a1) der Verzahnungsträger-Ringscheiben (248a,248b;348a,348b;648a,648b;1448a,1448b;1548a,1548b) kleiner ist als 300 mm, vorzugsweise kleiner als 200 mm.

39. Zahnradeinheit nach einem der Ansprüche 1 - 38,
**dadurch gekennzeichnet,**
**daß** die den Verzahnungsträger bildenden Teile, insbesondere der Verzahnungsträgermantel (22;122;322;422;522;622;722;822;1022) oder die Verzahnungsträgerscheiben (248a,248b;348a,348b;648a,648b;1448a,1448b;1548a,1548b), aus einem Einsatzstahl geschmiedet, durch anschließende spanabhebende Bearbeitung weiterbearbeitet, durch anschließende Einsatzhärtung gehärtet und dann nochmal spanabhebend feinbearbeitet sind.

40. Zahnradeinheit nach einem der Ansprüche 1 - 38,
**dadurch gekennzeichnet,**
**daß** die den Verzahnungsträger bildenden Teile, insbesondere der Verzahnungsträgermantel (22;122;322;422;522;622;722;822;1022) oder die Verzahnungsträgerscheiben (248a,248b;348a,348b;648a,648b;1448a,1448b;1548a,1548b), aus Vergütungsstahl oder Nitrierstahl hergestellt sind.

41. Zahnradeinheit nach einem der Ansprüche 1 - 40,
**dadurch gekennzeichnet,**
**daß** in Verzahnungsnähe, insbesondere an der Innenumfangsfläche des Verzahnungsträgermantels (722), Temperatur-Sensorelemente (734), insbesondere Thermoelemente, anbringbar sind.

42. Zahnradeinheit nach einem der Ansprüche 1 - 41,
**dadurch gekennzeichnet,**
**daß** sie wenigstens einen Druckkamm (1384; 1584a, 1584b) und/oder einen Druckkamm-Eingriffsring (1386) aufweist, insbesondere als Teil einer Endscheibe (1326b; 1526a, 1526b) oder einer an einer Endscheibe (1326b; 1526a, 1526b) angebrachten Ausgleichsmasse.

## Claims

1. A toothed wheel unit with external toothing (12; 112; 212; 312; 412; 512; 612; 712; 1312; 1412; 1512), in particular for heavy machinery gears and/or rapidly moving gears like turbomachinery gears, comprising a toothing carrier with an external toothing (20a, 20b; 120a, 120b; 220a, 220b; 320a, 320b; 420a, 420b; 520a; 520b; 720a, 720b; 1320; 1420a, 1420b, 1520) mounted to a circumferential surface and a bearing journal (32a, 32b; 132a, 132b; 232a, 232b; 332a, 332b; 432a, 432b; 532a; 632a, 632b; 732a, 732b; 1332a, 1332b; 1532a, 1532b) or connection portion joined with the toothing carrier, the bearing journal (32a, 32b; 132a, 132b; 232a, 232b; 332a, 332b; 432a, 432b; 532a; 632a, 632b; 732a, 732b; 1332a, 1332b; 1532a, 1532b) or connection portion being disposed in at least one axial end region (24a, 24b; 124a, 124b; 224a, 224b; 324a, 324b; 424b; 724a, 724b; 1324b; 1524b) of the toothing carrier, adjacent to the end region and extending in opposite direction of the end region,
**characterized in that**
the toothing carrier is either provided
with a toothing carrier casing (22; 122; 322; 422; 522; 622; 722; 822; 1022), whose inner diameter (d1 ) is larger than the diameter (d2) of the bearing journal (32a, 32b; 132a, 132b; 232a, 232b; 332a, 332b; 432a, 432b; 532a; 632a, 632b; 732a, 732b; 1332a, 1332b; 1532a, 1532b) or the connection portion,
or/and
with a plurality of toothing carrier plates (248a, 248b; 348a, 348b; 648a, 648b; 1448a, 1448b; 1548a, 1548b) following each other in axial direction and joined with each other.

2. A toothed wheel unit according to claim 1,
**characterized in that**
the toothing carrier casing (22; 122; 322; 422; 522; 622; 722; 822; 1022) is joined to an end plate (26a, 26b; 126a, 126b; 326a, 326b; 426a, 426b; 526a, 526b; 726a, 726b; 1326a, 1326b; 1526a, 1526b), in the central region of which the bearing journal (32a, 32b; 132a, 132b; 232a, 232b; 332a, 332b; 432a, 432b; 532a; 632a, 632b; 732a, 732b; 1332a, 1332b; 1532a, 1532b) or the connection portion is arranged on at least one end (24a, 24b; 124a, 124b; 224a, 224b; 324a, 324b; 424b; 724a, 724b; 1324b; 1524b), preferably on both ends.

3. A toothed wheel unit according to claim 2,
**characterized in that**
the end plate (26a, 26b; 126a, 126b; 326a, 326b; 426a, 426b; 526a, 526b; 726a, 726b; 1326a, 1326b; 1526a, 1526b) is produced integrally with the bearing journal (32a, 32b; 132a, 132b; 232a, 232b; 332a, 332b; 432a, 432b; 532a; 632a, 632b; 732a, 732b; 1332a, 1332b; 1532a, 1532b) or connection portion.

4. A toothed wheel unit according to claim 2 or 3,
**characterized in that**
the end plate (26a, 26b; 126a, 126b; 326a, 326b; 426a, 426b; 526a, 526b; 726a, 726b; 1326a, 1326b; 1526a, 1526b) - viewed in a sectional plane containing the axis of the toothed wheel unit (12; 112; 212; 312; 412; 512; 612; 712; 1312; 1412; 1512) - has walls which extend deviating from a plane normal to the axis in the radial intermediate region (36a,36b; 336a, 336b; 436a, 436b; 536a; 736a, 736b) between the outer diameter of the bearing journal or connection portion and the inner diameter (d1) of the toothing carrier casing (22; 122; 322; 422; 522; 622; 722; 822; 1022).

5. A toothed wheel unit according to claim 3 or 4,
**characterized in that**
- viewed in a sectional plane containing the axis of the toothed wheel unit (12; 112; 212; 312; 412; 512; 612; 712; 1312; 1412; 1512) - the wall extension and the mass distribution of the end plate (26a, 26b; 126a, 126b; 326a, 326b; 426a, 426b; 526a, 526b; 726a, 726b; 1326a, 1326b; 1526a, 1526b) are such that radial displacements of the connection region (38a, 38b; 138a, 138b; 638a, 638b) on the end plate side and of the connection region on the toothing carrier side due to centrifugal forces are approximated to one another irrespective of the connection of the two connection regions.

6. A toothed wheel unit according to any of claims 3 to 5,
**characterized in that**
- viewed in a sectional plane containing the axis of the toothed wheel unit (12; 112; 212; 312; 412; 512; 612; 712; 1312; 1412; 1512) - the wall extension of the end plate (26a, 26b; 126a, 126b; 326a, 326b; 426a, 426b; 526a, 526b; 726a, 726b; 1326a, 1326b; 1526a, 1526b) has a convex curvature (36a;36b) towards the inside of the toothing carrier casing (22; 122; 322; 422; 522; 622; 722; 822; 1022) in the radial region between the outer diameter of the bearing journal (32a, 32b; 132a, 132b; 232a, 232b; 332a, 332b; 432a, 432b; 532a; 632a, 632b; 732a, 732b; 1332a, 1332b; 1532a, 1532b) or connection portion on the one hand and the toothing carrier casing (22; 122; 322; 422; 522; 622; 722; 822; 1022) on the other hand.

7. A toothed wheel unit according to any of claims 2 to 6,
**characterized in that**
the end plate (26a, 26b; 126a, 126b; 326a, 326b; 426a, 426b; 526a, 526b; 726a, 726b; 1326a, 1326b; 1526a, 1526b) is provided with a compensation mass (40a, 40b; 140a, 140b; 340a, 340b; 440a, 440b; 540a, 540b; 740a, 740b; 1340a) which radially rises above the zone of connection (38a, 38b; 138a, 138b; 638a, 638b) with the toothing carrier casing (22; 122; 322; 422; 522; 622; 722; 822; 1022).

8. A toothed wheel unit according to any of claims 2 to 7,
**characterized in that**
the end plate (26a, 26b; 126a, 126b; 326a, 326b; 426a, 426b; 526a, 526b; 726a, 726b; 1326a, 1326b; 1526a, 1526b) is welded to the toothing carrier casing (22; 122; 322; 422; 522; 622; 722; 822; 1022) at the zone of connection (38a, 38b; 138a, 138b; 638a, 638b).

9. A toothed wheel unit according to any of claims 2 to 8,
**characterized in that**
the end plate (26a, 26b; 126a, 126b; 326a, 326b; 426a, 426b; 526a, 526b; 726a, 726b; 1326a, 1326b; 1526a, 1526b) is in a torque transmitting or/and centering form-fit connection (252a,252b; 352a, 352b; 1452a, 1452b) or in a force transmitting connection with the toothing carrier casing (22; 122; 322; 422; 522; 622; 722; 822; 1022) at the zone of connection (38a, 38b; 138a, 138b; 638a, 638b).

10. A toothed wheel unit according to claim 9,
**characterized in that**
the end plate (26a, 26b; 126a, 126b; 326a, 326b; 426a, 426b; 526a, 526b; 726a, 726b; 1326a, 1326b; 1526a, 1526b) is axially wired to the toothing carrier casing (22; 122; 322; 422; 522; 622; 722; 822; 1022) at the zone of connection (38a, 38b; 138a, 138b; 638a, 638b).

11. A toothed wheel unit according to claim 10,
**characterized in that**
axial wiring means (30a, 30b;142; 242; 330a, 330b; 430b; 730a, 730b; 1330b; 1530b) are provided in the radial region of the zone of connection (38a, 38b; 138a, 138b; 638a, 638b) between the end plate (26a, 26b; 126a, 126b; 326a, 326b; 426a, 426b; 526a, 526b; 726a, 726b; 1326a, 1326b; 1526a, 1526b) and the toothing carrier casing (22; 122; 322; 422; 522; 622; 722; 822; 1022) for the axial wiring of the end plate (26a, 26b; 126a, 126b; 326a, 326b; 426a, 426b; 526a, 526b; 726a, 726b; 1326a, 1326b; 1526a, 1526b) to the toothing carrier casing (22; 122; 322; 422; 522; 622; 722; 822; 1022).

12. A toothed wheel unit according to claim 10 or 11,
**characterized in that**
axial wiring means (30a, 30b; 142; 242; 330a, 330b; 430b; 730a, 730b; 1330a; 1530b) are provided radially inside the zone of connection (38a, 38b; 138a, 138b; 638a, 638b) between the end plate (26a, 26b; 126a, 126b; 326a, 326b; 426a, 426b; 526a, 526b; 726a, 726b; 1326a, 1326b; 1526a, 1526b) and the toothing carrier casing (22; 122; 322; 422; 522; 622; 722; 822; 1022) for the axial wiring of the end plate (26a, 26b; 126a, 126b; 326a, 326b; 426a, 426b; 526a, 526b; 726a, 726b; 1326a, 1326b; 1526a, 1526b) to the toothing carrier casing.

13. A toothed wheel unit according to claim 12,
**characterized in that**
axial wiring means (30a, 30b; 142; 242; 330a, 330b; 430b; 730a, 730b; 1330a; 1530b) are provided in the axis region of the toothed wheel unit (12; 112; 212; 312; 412; 512; 612; 712; 1312; 1412; 1512) for the axial wiring of the end plate (26a, 26b; 126a, 126b; 326a, 326b; 426a, 426b; 526a, 526b; 726a, 726b; 1326a, 1326b; 1526a, 1526b) to the toothing carrier casing (22; 122; 322; 422; 522; 622; 722; 822; 1022).

14. A toothed wheel unit according to any of claims 2 to 13,
**characterized in that**
centering means (28a, 28b; 128a, 128b;.428a, 428b; 728a, 728b; 1328a, 1328b) are provided on the end plate (26a, 26b; 126a, 126b; 326a, 326b; 426a, 426b; 526a, 526b; 726a, 726b; 1326a, 1326b; 1526a, 1526b) or/and on the toothing carrier casing (22; 122; 322; 422; 522; 622; 722; 822; 1022).

15. A toothed wheel unit according to any of claims 1 to 14,
**characterized in that**
at least one of two bearing journals (632a,632b) or connection portions is made hollow and that a shaft (656) associated to the toothed wheel unit (612) is guided through the hollow bearing journal (632a) or connection portion and is in torque transmitting connection (662) with the toothed wheel unit (612) inside the toothing carrier casing (622) or in the region of an opposing bearing journal (632b) or connection portion.

16. A toothed wheel unit according to any of claims 1 to 15,
**characterized in that**
the external toothing (20a, 20b; 120a, 120b; 220a, 220b; 320a, 320b; 420a, 420b; 520a; 520b; 720a, 720b; 1320; 1420a, 1420b, 1520) is arranged in form of a spur toothing or a helical toothing or a double helical toothing.

17. A toothed wheel unit according to any of claims 1 to 16,
**characterized in that**
cooling surfaces to which a coolant is admitted or/and which transport a coolant are provided in the toothing carrier (722) close to the external toothing (720a, 720b).

18. A toothed wheel unit according to claim 17,
**characterized in that**
the cooling surfaces, to which a coolant is admitted or/and which transport a coolant, comprise a cooling casing (764), which is arranged radially inside the toothing carrier casing (722).

19. A toothed wheel unit according to claim 17 or 18,
**characterized in that**
the coolant transporting cooling surfaces cause a coolant flow, which is essentially parallel to the axis direction of the toothed wheel unit (712).

20. A toothed wheel unit according to claim 17 or 18,
**characterized in that** the coolant transporting coolant surfaces cause a coolant flow with a helical course around the axis of the toothed wheel unit (712).

21. A toothed wheel unit according to any of claims 17 to 20,
**characterized in that**
the coolant transporting cooling surfaces cause a coolant flow, which passes at least once continuously all over the axial length of the external toothing (720a, 720b).

22. A toothed wheel unit according to any of claims 17 to 20,
**characterized in that**
the coolant transporting cooling surfaces cause a coolant flow, which passes from both axial ends (724a, 724b) of the external toothing (720a, 720b) to an axially central region of the external toothing (720a, 720b).

23. A toothed wheel unit according to any of claims 17 to 20,
**characterized in that**
the coolant transporting cooling surfaces cause a coolant flow, which passes from an axially central region of the external toothing (720a, 720b) to both axial ends (724a, 724b) of the external toothing (720a, 720b).

24. A toothed wheel unit according to claim 22,
**characterized in that**
the coolant flow is guided through the toothing carrier casing (722) towards the surrounding region of the external toothing (720a, 720b) in the axially central region of the external toothing (720a, 720b), preferably in the region of an axially central interruption (772) of the external toothing (720a, 720b).

25. A toothed wheel unit according to any of claims 18 to 24,
**characterized in that**
the cooling casing (1164; 1264) is provided with spacer or/and coolant transporting ribs (1180; 1282a, 1282b) on its outer surface directed towards the inner circumferential surface of the toothing carrier casing (722) or/and that ribs are arranged at the inside of the toothing carrier casing.

26. A toothed wheel unit according to claim 25,
**characterized in that**
the ribs (1180) extend essentially parallel to the axis of the toothed wheel unit (712).

27. A toothed wheel unit according to claim 25,
**characterized in that**
the ribs (1282a, 1282b) extend helically around the axis of the toothed wheel unit (712).

28. A toothed wheel unit according to any of claims 1 to 27,
**characterized in that**
the toothing carrier casing (22; 122; 322; 422; 522; 622; 722; 822; 1022) is formed by at least one single-piece tube section.

29. A toothed wheel unit according to claim 28,
**characterized in that**
with tube section external diameters (d3) of 900 mm and more the radial thickness (w1) of the tube section is less than 200 mm, preferably less than 150 mm, and that the radial thickness (w1) is reduceable in case of tube section external diameters of less than 900 mm in the ratio that the tube section external diameter bears to 900 mm.

30. A toothed wheel unit according to claim 28 or 29,
**characterized in that**
the radial thickness (w1) of the tube section is less than 30 % of the tube section external diameter, preferably less than 20 %.

31. A toothed wheel unit according to any of claims 28 to 30,
**characterized in that**
the radial thickness (w1 ) of the tube section less the toothing height is more than four times the real pitch module of the toothing (20a, 20b; 120a, 120b; 220a, 220b; 320a, 320b; 420a, 420b; 520a; 520b; 720a, 720b; 1320; 1420a, 1420b, 1520), preferably more than eight times the real pitch module of the toothing (20a, 20b; 120a, 120b; 220a, 220b; 320a, 320b; 420a, 420b; 520a; 520b; 720a, 720b; 1320; 1420a, 1420b, 1520).

32. A toothed wheel unit according to claim 1,
**characterized in that**
in an embodiment of the toothing carrier casing with a plurality of toothing carrier plates (248a, 248b; 348a, 348b; 648a, 648b; 1448a, 1448b; 1548a, 1548b) following one another in the axial direction and joined to one another, the axial thickness (a1) of the toothing carrier plates (248a, 248b; 348a, 348b; 648a, 648b; 1448a, 1448b; 1548a, 1548b) is less than 200 mm, preferably less than 150 mm.

33. A toothed wheel unit according to any of claims 1 to 27 and 32,
**characterized in that**
the toothing carrier casing is formed by toothing carrier ring plates (248a, 248b; 348a, 348b; 648a, 648b; 1448a, 1448b; 1548a, 1548b) following each other in the axial direction and indirectly or directly joined to one another.

34. A toothed wheel unit according to claim 33,
**characterized in that**
in the case of an axial subdivision of the external toothing, individual axial sections (20a, 20b; 120a, 120b; 220a, 220b; 320a, 320b; 420a, 420b; 520a; 520b; 720a, 720b; 1320; 1420a, 1420b, 1520) of the external toothing are respectively associated to a toothing carrier plate (248a, 248b; 348a, 348b; 648a, 648b; 1448a, 1448b; 1548a, 1548b) or to a package of toothing carrier plates.

35. A toothed wheel unit according to claim 34,
**characterized in that**
toothing carrier plates (248a, 248b; 348a, 348b; 648a, 648b; 1448a, 1448b; 1548a, 1548b) or packages of toothing carrier plates following one another are connected with each other by centering or/and torque transmitting form-fit connection means (250).

36. A toothed wheel unit according to any of claims 1 and 32 to 35,
**characterized in that**
it comprises a shaft (1488) with a radial flange (1490) and that a respective toothing carrier ring plate (1448a, 1448b) is mounted on each side of the radial flange (1490).

37. A toothed wheel unit according to claim 36,
**characterized in that**
the toothing carrier ring plates (1448a, 1448b) are connected with the radial flange (1490) by a respective torque transmitting or/and centering form-fit connection (1452a, 1452b) and axial wiring means (1492).

38. A toothed wheel unit according to any of claims 33 to 37,
**characterized in that**
the radial thickness (w4) of the toothing carrier ring plates (248a, 248b; 348a, 348b; 648a, 648b; 1448a, 1448b; 1548a, 1548b) and the axial thickness (a1) of the toothing carrier ring plates (248a, 248b; 348a, 348b; 648a, 648b; 1448a, 1448b; 1548a, 1548b) are less than 300 mm, preferably less than 200 mm.

39. A toothed wheel unit according to any of claims 1 to 38,
**characterized in that**
the parts forming the toothing carrier, in particular the toothing carrier casing (22; 122; 322; 422; 522; 622; 722; 822; 1022) or the toothing carrier plates (248a, 248b; 348a, 348b; 648a, 648b; 1448a, 1448b; 1548a, 1548b) are forged from a case hardened steel, are subsequently machined by a metal cutting treatment, are hardened by subsequent case hardening and are then again fine-machined by metal cutting.

40. A toothed wheel unit according to any of claims 1 to 38,
**characterized in that**
the parts forming the toothing carrier, in particular the toothing carrier casing (22; 122; 322; 422; 522; 622; 722; 822; 1022) or the toothing carrier plates (248a, 248b; 348a, 348b; 648a, 648b; 1448a, 1448b; 1548a, 1548b) are produced from tempering steel or nitriding steel.

41. A toothed wheel unit according to any of claims 1 to 40,
**characterized in that**
temperature sensor elements (734), in particular thermoelements, are mountable next to the toothing, in particular at the inner circumferential surface of the toothing carrier casing (722).

42. A toothed wheel unit according to any of claims 1 to 41,
**characterized in that**
it comprises at least one pressure comb (1384; 1584a, 1584b) and/or one pressure comb engagement ring (1386), in particular as a part of an end plate (1326b; 1526a, 1526b) or a compensation mass mounted to an end plate (1326b; 1526a, 1526b).

## Revendications

1. Unité de roue dentée à denture extérieure (12 ; 112 ; 212 ; 312 ; 412 ; 512 ; 612 ; 712 ; 1312 ; 1412 ; 1512) en particulier pour engrenages de matériels lourds et/ou engrenages à grande vitesse, tels que des engrenages de turbomachines, comprenant un support de denture avec une denture extérieure (20a, 20b ; 120a, 120b ; 220a, 220b ; 320a, 320b ; 420a, 420b ; 520a, 520b ; 720a, 720b ; 1320 ; 1420a, 1420b ; 1520) disposée sur une surface périphérique et un tourillon (32a, 32b ; 132a, 132b ; 232a, 232b ; 332a, 332b ; 432a, 432b ; 532a ; 632a, 632b ; 732a, 732b ; 1332a, 1332b ; 1532a, 1532b) ou pièce de raccordement relié au support de denture, ledit tourillon ou pièce de raccordement étant disposé à au moins une zone d'extrémité axiale (24a, 24b ; 124a, 124b ; 224a, 224b ; 324a, 324b ; 424b ; 724a, 724b ; 1324b ; 1524b) du support de denture, de manière adjacente à cette zone d'extrémité et s'éteignant de celle-ci dans le sens axial, **caractérisé en ce que** le support de denture est réalisé avec une virole de support de denture (22 ; 122 ; 322 ; 422 ; 522 ; 622 ; 722 ; 822 ; 1022) dont le diamètre intérieur (d1) est plus grand que le diamètre (d2) du tourillon (32a, 32b ; 132a, 132b ; 232a, 232b ; 332a, 332b ; 432a, 432b ; 532a ; 632a, 632b ; 732a, 732b; 1332a, 1332b; 1532a, 1532b) ou de la pièce de raccordement ou/et avec une pluralité de disques de support de denture (248a, 248b ; 348a, 348b ; 648a, 648b ; 1448a, 1448b ; 1548a, 1 548b) se suivant dans le sens axial et reliés les uns aux autres.

2. Unité de roue dentée selon la revendication 1, **caractérisée en ce que** la virole de support de denture (22 ; 122 ; 322 ; 422 ; 522 ; 622 ; 722 ; 822 ; 1022) est reliée à au moins une extrémité (24a, 24b ; 124a, 124b ; 224a, 224b ; 324a, 324b ; 424b ; 724a, 724b ; 1324b ; 1524b), de préférence aux deux extrémités, avec un disque d'extrémité (26a, 26b ; 126a, 126b ; 326a, 326b ; 426a, 426b ; 526a ; 726a, 726b ; 1326a, 1326b ; 1526a, 1526b) dans la zone centrale duquel est disposé le tourillon (32a, 32b ; 132a, 132b ; 232a, 232b ; 332a, 332b ; 432a, 432b ; 532a ; 632a, 632b ; 732a, 732b ; 1332a, 1332b ; 1532a, 1532b) ou la pièce de raccordement.

3. Unité de roue dentée selon la revendication 2, **caractérisée en ce que** le disque d'extrémité (26a, 26b ; 126a, 126b ; 326a, 326b ; 426a, 426b ; 526a ; 726a, 726b ; 1326a, 1326b ; 1526a, 1526b) est réalisé d'une seule pièce avec le tourillon (32a, 32b ; 132a, 132b ; 232a, 232b ; 332a, 332b ; 432a, 432b ; 532a ; 632a, 632b ; 732a, 732b ; 1332a, 1332b ; 1532a, 1532b) ou la pièce de raccordement.

4. Unité de roue dentée selon la revendication 2 ou 3, **caractérisée en ce que**, quand on regarde dans un plan de coupe contenant l'axe de l'unité de roue dentée (12; 112; 212; 312; 412 ; 512 ; 612; 712; 1312; 1412 ; 1512), le disque d'extrémité (26a, 26b; 126a, 126b; 326a, 326b ; 426a, 426b ; 526a ; 726a, 726b ; 1326a, 1326b ; 1526a, 1526b) possède un tracé de paroi s'écartant d'un plan normal à l'axe dans la zone intermédiaire radiale (36a, 36b ; 336a, 336b ; 436a, 436b ; 536a ; 736a, 736b) entre le diamètre extérieur du tourillon ou de la pièce de raccordement et le diamètre intérieur (d1) de la virole de support de denture (5).

5. Unité de roue dentée selon la revendication 3 ou 4, **caractérisé en ce que**, quand on regarde dans un plan de coupe contenant l'axe de l'unité de roue dentée (1), le tracé de paroi et la répartition des masses du disque d'extrémité (26a, 26b ; 126a, 126b ; 326a, 326b ; 426a, 426b ; 526a ; 726a, 726b ; 1326a, 1326b ; 1526a, 1526b) sont tels que des déplacements radiaux, dus à la force centrifuge, de la zone de jonction (38a, 38b ; 138a, 138b ; 638a, 638b) côté disque d'extrémité et de la zone de jonction côté support de denture sont approchés l'un de l'autre indépendamment de la liaison des deux zones de jonction.

6. Unité de roue dentée selon l'une des revendications 3 à 5, **caractérisé en ce que**, quand on regarde dans un plan de coupe contenant l'axe de l'unité de roue dentée (12 ; 112 ; 212 ; 312 ; 412 ; 512 ; 612 ; 712 ; 1312 ; 1412 ; 1512), le tracé de paroi du disque d'extrémité (26a, 26b ; 126a, 126b ; 326a, 326b ; 426a, 426b ; 526a ; 726a, 726b ; 1326a, 1326b ; 1526a, 1526b) possède une courbure convexe (36a, 36b) vers l'intérieur de la virole de support de denture (22 ; 122 ; 322 ; 422 ; 522 ; 622 ; 722 ; 822 ; 1022) dans la zone radiale entre le diamètre extérieur du tourillon (32a, 32b ; 132a, 132b ; 232a, 232b ; 332a, 332b ; 432a, 432b ; 532a ; 632a, 632b ; 732a, 732b ; 1332a, 1332b ; 1532a, 1532b) ou de la pièce de raccordement, d'une part, et la virole de support de denture (22 ; 122 ; 322 ; 422 ; 522 ; 622 ; 722 ; 822 ; 1022), d'autre part.

7. Unité de roue dentée selon l'une des revendications 2 à 6, **caractérisé en ce que** le disque d'extrémité (26a, 26b ; 126a, 126b ; 326a, 326b ; 426a, 426b ; 526a ; 726a, 726b ; 1326a, 1326b ; 1526a, 1526b) est réalisé avec une masse d'équilibrage (40a, 40b ; 140a, 140b ; 340a, 340b ; 440a, 440b ; 540a ; 740a, 740b ; 1340a) dépassant dans le sens radial le point de jonction (38a, 38b ; 138a, 138b ; 638a, 638b) avec la virole de support de denture (22 ; 122 ; 322 ; 422 ; 522 ; 622 ; 722 ; 822 ; 1022).

8. Unité de roue dentée selon l'une des revendications 2 à 7, **caractérisée en ce que** le disque d'extrémité ((26a, 26b ; 126a, 126b ; 326a, 326b ; 426a, 426b ; 526a ; 726a, 726b ; 1326a, 1326b ; 1526a, 1526b) est soudé avec la virole de support de denture (22 ; 122 ; 322 ; 422 ; 522 ; 622 ; 722 ; 822 ; 1022) au point de jonction (38a, 38b ; 138a, 138b ; 638a, 638b).

9. Unité de roue dentée selon l'une des revendications 2 à 8, **caractérisée en ce que** le disque d'extrémité (26a, 26b ; 126a, 126b ; 326a, 326b ; 426a, 426b ; 526a ; 726a, 726b ; 1326a, 1326b ; 1526a, 1526b)) est relié au point de jonction (38a, 38b ; 138a, 138b; 638a, 638b) avec la virole de support de denture (22 ; 122 ; 322 ; 422 ; 522 ; 622 ; 722 ; 822 ; 1022) par une liaison solidaire avec correspondance de forme reportant le couple de rotation ou/et exerçant un centrage (252a, 252b ; 352a, 352b ; 1452a, 1452b) ou par une liaison dynamique.

10. Unité de roue dentée selon la revendication 9, **caractérisée en ce que** le disque d'extrémité (26a, 26b ; 126a, 126b ; 326a, 326b ; 426a, 426b ; 526a ; 726a, 726b ; 1326a, 1326b ; 1526a, 1526b) est fixé dans le sens axial au point de jonction (38a, 38b ; 138a, 138b ; 638a, 638b) avec la virole de support de denture (22 ; 122 ; 322 ; 422 ; 522 ; 622 ; 722 ; 822 ; 1022).

11. Unité de roue dentée selon la revendication 10, **caractérisée en ce que**, pour fixer dans le sens axial le disque d'extrémité (26a, 26b ; 126a, 126b ; 326a, 326b ; 426a, 426b ; 526a ; 726a, 726b ; 1326a, 1326b ; 1526a, 1526b) avec la virole de support de denture (22 ; 122 ; 322 ; 422 ; 522 ; 622 ; 722 ; 822 ; 1022), il est prévu des moyens de fixation axiaux (30a, 30b ; 142 ; 242 ; 330a, 330b ; 430b ; 730a, 730b ; 1330b ; 1530b) dans la zone radiale du point de jonction (38a, 38b ; 138a, 138b ; 638a, 638b) entre disque d'extrémité (26a, 26b ; 126a, 126b ; 326a, 326b ; 426a, 426b ; 526a ; 726a, 726b ; 1326a, 1326b ; 1526a, 1526b) et virole de support de denture (22 ; 122 ; 322 ; 422 ; 522 ; 622 ; 722 ; 822 ; 1022).

12. Unité de roue dentée selon la revendication 10 ou 11, **caractérisée en ce que**, pour fixer dans le sens axial le disque d'extrémité (26a, 26b ; 126a, 126b ; 326a, 326b ; 426a, 426b ; 526a ; 726a, 726b ; 1326a, 1326b ; 1526a, 1526b) avec la virole de support de denture (22 ; 122 ; 322 ; 422 ; 522 ; 622 ; 722 ; 822 ; 1022), il est prévu des moyens de fixation axiaux (30a, 30b ; 142 ; 242 ; 330a, 330b ; 430b ; 730a, 730b ; 1330b ; 1530b) dans le sens radial à l'intérieur du point de jonction (38a, 38b; 138a, 138b ; 638a, 638b) entre disque d'extrémité (26a, 26b ; 126a, 126b ; 326a, 326b ; 426a, 426b ; 526a ; 726a, 726b ; 1326a, 1326b ; 1526a, 1526b) et virole de support de denture (22 ; 122 ; 322 ; 422 ; 522 ; 622 ; 722 ; 822 ; 1022).

13. Unité de roue dentée selon la revendication 12, **caractérisé en ce que**, pour fixer dans le sens axial le disque d'extrémité (36a, 36b ; 336a, 336b ; 436a, 436b ; 536a ; 736a, 736b) avec la virole de support de denture (22 ; 122 ; 322 ; 422 ; 522 ; 622 ; 722 ; 822 ; 1022) il est prévu des moyens de fixation axiaux (30a, 30 ; 142 ; 242 ; 330a, 330b ; 430b ; 730a, 730b ; 1330b ; 1530b) dans la zone de l'axe de l'unité de roue dentée (12; 112; 212; 312; 412; 512; 612; 712; 1312; 1412 ; 1512).

14. Unité de roue dentée selon l'une des revendications 2 à 13, **caractérisée en ce que** des moyens de centrage (28a, 28b ; 128a, 128b ; 428a, 428b ; 728a, 728b ; 1328b ; 1528b) sont prévus sur le disque d'extrémité (26a, 26b ; 126a, 126b ; 326a, 326b ; 426a, 426b ; 526a ; 726a, 726b ; 1326a, 1326b ; 1526a, 1526b) ou/et sur la virole de support de denture (22 ; 122 ; 322 ; 422 ; 522 ; 622 ; 722 ; 822 ; 1022).

15. Unité de roue dentée selon l'une des revendications 1 à 14, **caractérisée en ce qu'**au moins un de deux tourillons (632a, 632b) ou pièces de raccordement est réalisé creux et qu'un arbre (656) associé à l'unité de roue dentée (612) traverse le tourillon formé en creux (632a) ou la pièce de raccordement et est relié d'une manière reportant le couple de rotation (662) avec l'unité de roue dentée (612) à l'intérieur de la virole de support de denture (622) ou dans la zone d'un tourillon opposé (632b) ou pièce de raccordement.

16. Unité de roue dentée selon l'une des revendications 1 à 15, **caractérisée en ce que** la denture extérieure (20a, 20b ; 120a, 120b ; 220a, 220b ; 320a, 320b ; 420a, 420b ; 520a, 520b ; 720a, 720b ; 1320 ; 1420a, 1420b ; 1520) est formée comme une denture droite ou comme une denture hélicoïdale ou comme une denture hélicoïdale double.

17. Unité de roue dentée selon l'une des revendications 1 à 16, **caractérisée en ce que** des surfaces de refroidissement exposées à un fluide de refroidissement ou/et dans lesquelles circule un fluide de refroidissement sont prévues dans le support de denture (722), à proximité de la denture extérieure (720a, 720b).

18. Unité de roue dentée selon la revendication 17, **caractérisée en ce que** les surfaces de refroidissement exposées au fluide de refroidissement ou/et dans lesquelles circule le fluide de refroidissement comprennent une enveloppe de refroidissement (764) qui est disposée dans le sens radial à l'intérieur de la virole de support de denture (722).

19. Unité de roue dentée selon la revendication 17 ou 18, **caractérisée en ce que** les surfaces de refroidissement dans lesquelles circule le fluide de refroidissement provoquent un écoulement de fluide de refroidissement essentiellement parallèle à la direction de l'axe de l'unité de roue dentée (712).

20. Unité de roue dentée selon la revendication 17 ou 18, **caractérisée en ce que** les surfaces de refroidissement dans lesquelles circule le fluide de refroidissement provoquent un écoulement de fluide de refroidissement avec un tracé hélicoïdal autour de l'axe de l'unité de roue dentée (712).

21. Unité de roue dentée selon l'une des revendications 17 à 20, **caractérisée en ce que** les surfaces de refroidissement dans lesquelles circule le fluide de refroidissement provoquent un écoulement de fluide de refroidissement qui s'étend au moins une fois en continu sur la longueur axiale de la denture extérieure (720a, 720b).

22. Unité de roue dentée selon l'une des revendications 17 à 20, **caractérisée en ce que** les surfaces de refroidissement dans lesquelles circule le fluide de refroidissement provoquent un écoulement de fluide de refroidissement qui s'étend des deux extrémités axiales (724a, 724b) de la denture extérieure (720a, 720b) vers une zone centrale dans le sens axial de la denture extérieure (720a, 720b).

23. Unité de roue dentée selon l'une des revendications 17 à 20, **caractérisée en ce que** les surfaces de refroidissement dans lesquelles circule le fluide de refroidissement provoquent un écoulement de fluide de refroidissement qui s'étend d'une zone centrale dans le sens axial de la denture extérieure (720a, 720b) vers les deux extrémités axiales (724a, 724b) de la denture extérieure (720a, 720b).

24. Unité de roue dentée selon la revendication 22, **caractérisée en ce que** l'écoulement de fluide de refroidissement est dirigé, dans la zone centrale dans le sens axial de la denture extérieure (720a, 720b), de préférence dans la zone d'une interruption centrale dans le sens axial (772) de la denture extérieure (720a, 720b), à travers la virole de support de denture (722) jusque dans la zone environnante de la denture extérieure (720a, 720b).

25. Unité de roue dentée selon l'une des revendications 18 à 24, **caractérisée en ce que** l'enveloppe de refroidissement (1 164 ; 1264) possède, sur sa surface extérieure tournée vers la surface périphérique intérieure de la virole de support de denture (722), des nervures d'écartement ou/et dans lesquelles circule un fluide de refroidissement (1180 ; 1282a, 1282b) ou/et que des nervures sont disposées sur la face intérieure de la virole de support de denture.

26. Unité de roue dentée selon la revendication 25, **caractérisée en ce que** les nervures (1180) s'étendent essentiellement parallèlement à l'axe de l'unité de roue dentée (712).

27. Unité de roue dentée selon la revendication 25, **caractérisée en ce que** les nervures (1282a, 1282b) s'étendent de manière hélicoïdale autour de l'axe de l'unité de roue dentée (712).

28. Unité de roue dentée selon l'une des revendications 1 à 27, **caractérisée en ce que** la virole de support de denture (22 ; 122 ; 322 ; 422 ; 522 ; 622 ; 722 ; 822 ; 1022) est formée par au moins un segment de tube d'une seule pièce.

29. Unité de roue dentée selon la revendication 28, **caractérisée en ce que**, dans le cas de diamètres extérieurs de segment de tube (d3) de 900 mm et plus, l'épaisseur radiale (w1) du segment de tube est inférieure à 200 mm, de préférence inférieure à 150 mm, et que, dans le cas de diamètres extérieurs de segment de tube inférieurs à 900 mm, l'épaisseur radiale (w1) peut diminuer dans le rapport du diamètre extérieur de segment de tube à 900 mm.

30. Unité de roue selon la revendication 28 ou 29, **caractérisée en ce que** l'épaisseur radiale (w1) du segment de tube est inférieure à 30% du diamètre extérieur de segment de tube, de préférence inférieure à 20%.

31. Unité de roue dentée selon l'une des revendications 28 à 30, **caractérisée en ce que** l'épaisseur radiale (w1) du segment de tube moins la hauteur de denture est supérieure au quadruple du module du pas réel de la denture (20a, 20b ; 120a, 120b ; 220a, 220b ; 320a, 320b ; 420a, 420b ; 520a, 520b ; 720a, 720b ; 1320 ; 1420a, 1420b ; 1520), de préférence supérieure à huit fois le module du pas réel de la denture (20a, 20b, 120a, 120b ; 220a, 220b ; 320a, 320b ; 420a, 420b ; 520a, 520b ; 720a, 720b ; 1320 ; 1420a, 1420b ; 1520).

32. Unité de roue dentée selon la revendication 1, **caractérisée en ce que**, dans le cas de la réalisation du support de denture avec une pluralité de disques de support de denture (248a, 248b ; 348a, 348b ; 648a, 648b ; 1448a, 1448b ; 1548a, 1548b) se suivant les uns les autres dans le sens axial et reliés les uns aux autres, l'épaisseur axiale (a1) des disques de support de denture (248a, 248b ; 348a, 348b ; 648a, 648b ; 1448a, 1448b ; 1548a, 1548b) est inférieure à 200 mm, de préférence inférieure à 150 mm.

33. Unité de roue dentée selon l'une des revendications 1 à 27 et 32, **caractérisée en ce que** la virole de support de denture est formée par des disques annulaires de support de denture (248a, 248b ; 348a, 348b ; 648a, 648b ; 1448a, 1448b ; 1548a, 1548b) se suivant les uns les autres dans la direction axiale et reliés les uns aux autres directement ou indirectement.

34. Unité de roue dentée selon la revendication 33, **caractérisée en ce que**, dans le cas d'une subdivision de la denture extérieure dans le sens axial, différents segments axiaux (20a, 20b, 120a, 120b ; 220a, 220b ; 320a, 320b ; 420a, 420b ; 520a, 520b ; 720a, 720b ; 1320 ; 1420a, 1420b ; 1520) de la denture extérieure sont associés chacun à un disque de support de denture (248a, 248b ; 348a, 348b ; 648a, 648b ; 1448a, 1448b ; 1548a, 1548b) ou à un ensemble de disques de support de denture.

35. Unité de roue dentée selon la revendication 34, **caractérisée en ce que** des disques de support de denture (248a, 248b ; 348a, 348b ; 648a, 648b ; 1448a, 1448b ; 1548a, 1548b) se suivant les uns les autres ou des ensembles de disques support de denture sont reliés les uns aux autres par des moyens de liaison solidaire avec correspondance de forme (250) avec centrage ou/et de manière reportant le couple de rotation.

36. Unité de roue dentée selon l'une des revendications 1 et 32 à 35, **caractérisée en ce qu'**elle comprend un arbre (1488) avec une bride radiale (1490) et qu'un disque annulaire de support de denture (1448a, 1448b) est disposé de chacun des deux côtés de la bride radiale (1490).

37. Unité de roue dentée selon la revendication 36, **caractérisée en ce que** les disques annulaires de support de denture (1448a, 1448b) sont reliés avec la bride radiale (1490) chacun par une liaison solidaire avec correspondance de forme (1452a, 1452b) reportant le couple de rotation ou/et exerçant un centrage et par des moyens de fixation axiaux (1492).

38. Unité de roue dentée selon l'une des revendications 33 à 37, **caractérisée en ce que** l'épaisseur radiale (w4) des disques annulaires de support de denture (248a, 248b ; 348a, 348b ; 648a, 648b ; 1448a, 1448b ; 1548a, 1548b) et l'épaisseur axiale (a1) des disques annulaires de support de denture (248a, 248b ; 348a, 348b ; 648a, 648b ; 1448a, 1448b ; 1548a, 1548b) sont inférieures à 300 mm, de préférence inférieures à 200 mm.

39. Unité de roue dentée selon l'une des revendications 1 à 38, **caractérisée en ce que** les pièces formant le support de denture, en particulier la virole de support de denture (22 ; 122 ; 322 ; 422 ; 522 ; 622 ; 722 ; 822 ; 1022) ou les disques de support de denture (248a, 248b ; 348a, 348b ; 648a, 648b ; 1448a, 1448b ; 1548a, 1548b) sont forgées dans un acier de cémentation, usinées ensuite par enlèvement de copeaux, durcies par cémentation ultérieure, puis finies par un nouvel usinage par enlèvement de copeaux.

40. Unité de roue dentée selon l'une des revendications 1 à 38, **caractérisée en ce que** les pièces formant le support de denture, en particulier la virole de support de denture (22 ; 122 ; 322 ; 422 ; 522 ; 622 ; 722 ; 822 ; 1022) ou les disques de support de denture (248a, 248b ; 348a, 348b ; 648a, 648b ; 1448a, 1448b ; 1548a, 1548b) sont réalisées dans un acier traité par trempe et revenu ou dans un acier de nitruration.

41. Unité de roue dentée selon l'une des revendications 1 à 40, **caractérisée en ce que** des capteurs de températures (734), en particulier des thermocouples, peuvent être posés à proximité de la denture, en particulier sur la surface périphérique intérieure de la virole de support de denture (722).

42. Unité de roue dentée selon l'une des revendications 1 à 41, **caractérisée en ce qu'**elle présente au moins une dent de pression (1384 ; 1584a ; 1584b) et/ou un anneau d'engrènement de la dent de pression (1386), en particulier sous la forme d'une partie d'un disque d'extrémité (1326b ; 1526a, 1526b) ou d'une masse d'équilibrage disposée sur un disque d'extrémité (1326b ; 1526a, 1526b).
